# EUROPÄISCHE PATENTANMELDUNG

(11) **EP 1 070 889 A2**
(43) Veröffentlichungstag der Anmeldung: **24.01.2001**
(21) Anmeldenummer: 00115784.1
(22) Anmeldetag: 21.07.2000
(51) Int. Cl.: F16K 1/12

(54) **Multifunktionales Axiales Regelventil**

(30) Priorität: 23.07.1999 SI 9900185; 30.08.1999 SI 9900198; 06.09.1999 SI 9900206
(71) Anmelder: Medvescek, Eva, 8250 Brezice (SI)
(72) Erfinder: Medvescek, Milan, 8250 Brezice (SI)
(74) Vertreter: Viering, Jentschura & Partner

(57) **Zusammenfassung**

Im multifunktionalen axialen Regelventil ist eine Messdüse (118) eingebaut, aus welcher der plus und minus Druck abgenommen wird, und die gleichzeitig für die Messung des Durchflusses für die Regelung des Differenzdruckes und als Impuls für die Regelung des Differenzdruckes oder Durchflusses dient. Die Handabsperrung ist in der einfacheren Version mit einem im Gehäuse integriertem Dreiwegeventil (43), das die Druckzufuhr absperrt und zugleich den Raum (40) auf der Minusseite der Membrane (385) entleert. Deshalb schliesst der Druck auf der Plusseite (37) der Membrane das Ventil. Die Federkrafteinstellung (19) ist mit Einstellelementen (21,222) ausgeführt, die in das Gehäuse eingeschraubt sind und abgedichtet mit einer statischen Dichtung sind. Auf der Membrane ist ein Dichtring, der die Absperrung mit dem Dreiwegeventil beim Durchflussregler ermöglicht. Die Gleitfläche und der Ventilteller (28) werden von aussen ins Gehäuse durch die Austrittsöffnung eingebaut. Dies ermöglicht einen einfachen Umtausch der Dichtungen und die Montage des Federrings.

## Beschreibung

Die Erfindung betrifft ein axiales Regelventil, das mit einer Membrane und Feder betätigt wird und eine einfache manuelle Absperrung auf hydraulischem Weg des Durchflusses sowie eine mechanische des anschliessbaren Mess- und Entleerungshahnes ermöglicht.

Damit ist ein Umtausch des Ventiltellers und -Sitzes ohne Zerlegen des Ventilgehäuses möglich. Mit einbezogen sind einfache Mechanismen zur Einstellung der Parameter.

Zusätzlich ermöglicht dieser Regler weitere Funktionen. Diese sind neben der schon genannten Absperrung noch das Messen des Durchflusses, Begrenzung der Öffnung, eine Entleerung und die Regulierung des Differenzdruckes und/oder Durchflusses. Eine erweiterte, teurere Ausführung ermöglicht zusätzlich die Drosselung und Absperrung der Armatur ohne dabei die die Voreinstellung zu verändern.

Der Regler ist besonders geeignet für die Steuerung der hochgehenden Leitungen in Zentralheizungen, in der Klimatisierung oder Kühlung und in Hausstationen der Fernwärmeversorgung oder -Kühlung.

### Problemlösung

Die Erfindung löst eines oder mehrere der folgenden technischen Probleme:

### Problem 1

Im axialen Regelventil, das mit Unterstützung einer Membrane und Feder funktioniert, soll die *Handabsperrung* so einfach und kostengünstig wie nur möglich ausgeführt werden. In bekannten Ausführungen von Axialreglern ist die Absperrung mit Hilfe von beweglichen Achsen realisiert, die durch die Gehäusewand auf den beweglichen Ventilsitz einwirken. Schlechte Eigenschaft der bekannten Lösungen ist, dass wegen der zentrischen Absperrung mindestens drei Achsen und ein Absperrad nötig sind, das gleichzeitig auf alle drei Achsen drückt. Jede einzelne Achse muss mit einer Dichtung abgedichtet werden, die für bewegliche Teile geignet ist. Solche Dichtungen sind aber sehr teuer.

### Problem 2

Im axialen Regelventil, das mit Unterstützung einer Membrane und Feder funktioniert, soll die *Einstellung* des *Differenzdruckes* oder des Durchflusses einfach und billig ausgeführt sein. In bekannten Ausführungen von Axialreglern ist die Einstellung der Federkraft mit wenigstens drei beweglichen Achsen ausgeführt, die durch das Gehäuse auf eine Feder andrücken und in einem bestimmten Bereich eine stufenlose Einstellung ermöglichen. Die Schwäche von bekannten Ausführungen liegt in der grossen Anzahl von Teilen und in der empfindlichen Abdichtung von diesen. Dabei ist die Einstellmutter leicht erreichbar, was eine leichte absichtliche Manipulierung der Einstellung ermöglicht. Es ist zwar möglich die Mutter zu plombieren, was aber nicht in allen Fällen ausreichend ist.

### Problem 3

Die vitalen inneren Teile, der Ventilteller und der Führungsring des Dichtsitzes sollen sich einfach austauschen lassen. Bei bekannten Ausführungen muss das zweiteilige Gehäuse zerlegt werden, wenn man die Dichtung auf dem beweglichen Ventilteller oder den Gumiteller auf dem Ventilteller ersetzen will. Die Schwäche dieser Lösung ist, dass die Montage des gesamten Gehäuses eine aufwendige Arbeit ist, die ohne besondere Vorrichtungen nicht ausführbar ist.

### Problem 4

Die Handabsperrung mit Hilfe eines integrierten Dreiwegeventiles soll auch im Durchflussregler möglich sein. Das Problem besteht daran, dass sich im Fall, dass es keinen Durchfluss gibt, die Drücke auf beiden Seiten der Membrane ausgleichen können und damit die Absperrung verhindern. Dies ist deswegen, weil bei bekannten Axialventilen die Membrane nur angelehnt auf den Membranteller und nicht befestigt ist. Der Absperrdruck der in Schliessrichtung auf die plus Seite der Membrane wirkt, kann so sogar die minus Seite der Membrane erreichen, wenn diese nicht fest mit dem Membrandisk verbunden ist.

Eine Membrane, die auf den Membranteller angebracht ist, ist aber bei einem Axialregler nur sehr schwer einzubauen. Erforderlich ist mehr Platz und zusätzliche Elemente, die diese Ausführung zusätzlich verteuern und die Vorteile des Gebrauches eines Dreiwegeventiles zunichte machen.

### Problem 5

Im axialen Regelventil, das mit Unterstützung einer Membrane und Feder funktioniert soll der Einbau eines Füllungsventils zwischen dem Betrieb und bei vollem Druck möglich sein. Das Problem ist, das die Ausführung einfach und kostengüstig sein muss. Bei bekannten Ausführungen ist die Bohrung für die Mediumzufuhr in den Entleerungshahn mit einem Absperrventil in klassischer Form oder in billiger mit einem Absperr- und Abdichtstopfen geschlossen. Der Nachteil des Systems von zwei Stopfen ist, das die Arbeitsweise mit ihnen zeitspielig ist und ein gewisses Wissen erfordert. Zugleich besteht die Gefahr, das der innere Stopfen bei der Absperrung zu viel eingedreht wird und dabei die Dichtfläche beschädigt. Der entfernte Dichtstopfen kann verlorengehen.

### Problem 6

Bei der Variante mit Flanschanschluss soll der Aussendurchmesser möglichst klein und zugleich das Ventil so kurz wie nur möglich sein soll. Dabei fällt das Problem an, das die Einstellelemente auf einem grösseren Durchmesser als die Flansche angebracht werden müssen wenn man die kleinstmögliche Länge erreichen will.

### Problem 7

Der Regler soll gleichzeitig mehrere Funktionen ermöglichen, wobei er so klein und kurz wie nur möglich sein soll, aber mit hoher Kapazität und niedrigem Schallpegel.

### Problem 8

In den Regler des Differenzdruckes oder Durchflusses soll ein sicherer und genauer Durchflussmesser eingebaut werden, wobei der Messbereich in mehreren Stuffen einstellbar sein soll.

### Problem 9

Die Messanschlüsse sollen zusammen in einer Stelle aus dem Gehäuse geführt werden und mit einer Armatur geschlossen werden.

### Problem 10

Eine Absperrung und Öffnungsbegrenzung soll möglich sein, wobei die Schliessung nicht die Begrenzung der Öffnung beinträchtigen soll, die dazu noch genau und unabhängig von der Öffnungskraft sein soll.

### Problem 11

Die Entlüftung der Plus Kammer soll mit einer einzigen Entlüftungsschraube möglich sein bei horizontalen oder vertikalen Einbau.

### Problem 12

Aus den gleichen Bauteilen soll es möglich sein einen Regler des Differenzdruckes oder Durchflusses zu bauen, bzw. einen kombinierten Regler Durchfluss/Differenzdruck zu realisieren.

### Problem 13

Der insgesammte permanente Druckverlust und Druckverbrauch zur Reglung des Reglers soll so klein wie nur möglich sein bei höchst präziser Regulierung.

### Problem 14

Die Federn, die in Form eines Ringes im axialen Regler eingebaut sind, kippen bei der Montage gerne um, wenn sie nicht sehr genau eingebaut sind ohne quere Abweichungen und Belastungen. Wenn beide Gehäusehälften mit einem Gewinde zusammengebaut werden und sich bei der Montage gegeneinander drehen, ist es sehr schwer die richtige Lage der Federn im Ring zu erzielen.

### Problem 15

Die Abdichtung im Ventilteller des Axialventils soll zuverlässig ausgeführt werden. Die bekannte Ausführung beinhaltet einen Ventilteller, einen Ventileinsatz, ein Gehäuse und eine Schraube. Das Problem ist, dass auch der Schraubenkopf dichten muss. Eine solche Abdichtung ist aber nicht so sicher als mit einer Gummidichtung. Der Einbau einer Gummidichtung ist aber wegen Raummangel problematisch und kann die Ausführung verteuern.

### Lösung der einzelnen Probleme 1÷15

### Problem 1:

Im Axialregler ist in das Impulsrohr, das den Druck des Mediums in die minus Kammer und die minus Seite der Membrane führt, ein Asperrventil eingebaut. In der minus Kammer dagegen ist ein Auslassventil eingebaut. Bis das Absperrventil geöffnet und das Auslassventil geschlossen sind funktioniert der Regler normal. Wenn man aber manuell den Durchfluss absperren wil, schliesst man das Absperrventil und öffnet das Auslassventil. Der Druck in der minus Kammer fällt auf Null und der Druck der plus Kammer aus der plus Seite der Membrane schliesst dicht das Regelventil. Eine noch bessere und billigere Lösung des Problems ist die Verwendung eines Dreiwegeventils, das integriert-eingebaut ins Gehäuse des Regelventiles ist.

Die Vorteile nach der Ausführungsform der Erfindung sind folgende:

Ein einfaches, kleines im Gehäuse integriertes Dreiwegeventil ist wesentlich billiger als drei abgedichtete Achsen mit einer grossen Absperrmutter.

Die Abdichtung nach Aussen ist mit nur einer statischen Dichtung ausgeführt.

Mit einer einfachen Teilöffnung einer Schraube schliessen wir das Regelventil.

Die Nachteile dieser Lösung:

Bei dem Auslass kann etwas Medium austreten (ungf. 6 cm³ für die Ventilgrösse DN15). Aber die Absperrung ist ohnehin nur dan erforderlich, wenn die Instalation entleert wird. Das Medium, das aus dem Ventil ausgelassen wird um die Absperrung zu erreichen ist also Bestandteil des Mediums das wir ohnehin beseitigen wollen.

Wenn der Systemdruck in der Leitung kleiner als der Federdruck ist (normalerweise 0,2 bar), ist eine Absperrung nicht möglich. Allerdings wird ein so niedriger Druck in Instalationen praktisch nicht verwendet so das diese Schwäche rein teoretisch ist.

### Problem 2:

Im axialen Regelventil ist die Einstellung der Federkraft mit Hilfe von drei gleich grossen fixierten Einstellelementen, die auf die Feder andrücken. Die Einstelischeiben können abgeschraubt und gewechselt werden. Die Vorteile dieser

Ausführung nach der Erfindung sind:

Eine billige Patrone mit einer statischen Dichtung ersetzt die teuere Metallachse mit einer dynamischen Dichtung und grosser Einstellmutter.

Die absichtliche Veränderung der Einstellung ist schwieriger weil die Einstellscheiben im Inneren des Gehäuses versteckt sind.

Die Einsteilscheiben können wärend des Betriebes und unter Druck gewechselt werden weil man mit dem Dreiwegeventil die Minuskammer mit den Federn und Einstellelementen entleeren können.

Die Nachteile dieser Ausführung sind:

Die Einstellung ist abgestuft in so vielen Schritten wie viel man verschieden Einstellplätzchen hat.

Die Justierung und Veränderung der Einstellung ist weniger komfortabel als die mit beweglichen Achsen und einer Einstellmutter. Allerdings ist eine zusätzliche Änderung nur sehr selten erforderlich,

Bei einer späteren Nachjustierung geht etwas Medium verloren. Aber dieser Verlust ist praktisch vernachläsigbar.

### Problem 3:

Die Leitbuchse die den beweglichen Ventilsitz und feststehenden Ventilteller führt und abdichtet wird durch die Auslasskammer eingeführt und mit einem Gewinde auf dem Ventilkreuz angebracht. Vorteile dieser Lösung sind:
Ein einfacher Austausch der inneren Teile;
Eine einfache und schnelle Erstmontage des Gehäuses;

Keine grosse Ringmutter auf dem Gehäuse und keine besondere zeitraubende Technologie zur fixierung des labilen Federringes ist erforderlich.

### Problem 4:

Auf der minus Seite der Membrane ist ein Dichtring ausgeführt, der in die Nut im Membranteller einsetzt. Dabei ist die Nut ein wenig breiter als der Dichtring, so dass bei der Montage der Membranenteller nur auf die Membrane andrückt und der Dichtring leicht in die Nut auf dem Teller einsetzt. Auf dem höchsten Punkt des Dichtkranzes ist eine zusätzliche Dichtlippe, die die Abdichtung des Ringes zusätzlich verbessert. Auf dem Membranteller ist knapp nach der Nut für den Dichtring ein kreisförmiger Kanal, der mit radialen Kanälen mit der Nut für den Dichtring verbunden ist und mit Bohrungen mit der Minus Kammer verbunden ist. Wenn man mit dem Dreiwegeventil den Zugang des Mediums abschliesst und man ihn entleert, fällt der Druck auf Null. Durch die Bohrung im Teller und den kreisförmigen und die radialen Kanäle fliesst sicher sofort das Medium auch aus dem Platz hinter dem Dichtring. Wenn der plus Druck bis auf den Dichtring kommt, drückt er auf ihn und dichtet ihn ab.

Vorteile dieser Lösung sind:
1. Mit einer zerlegbaren Membranscheibe und Membrane wird eine Abdichtung der minus Seite der Membrane erreicht und eine dichte Absperrung des des Durchflussreglers unter Gebrauch des Dreiwege-Ventils.

### Problem 5 (& ARV2 1):

In die Impulsleitung, die den plus Druck aus der Messdüse in die Messkammer leitet, ist eine Absperrschraube eingebaut, die nach aussen nur mit einem Gewinde dichtet. Eine volle Abdichtung nach aussen versichert ein Stopfen mit einer statischen Dichtung. Vor der Absperrung wir der Stopfen entfernt. Im Gehäuse ist in die Bohrung zur Mediumzufuhr in den Entleerungshahn ein Dreiwegeventil angebracht, das aus einem Rückschlagventil mit einer Feder mit einem Absperrstopfen mit einer Öffnungsnadel zusammengesetzt ist. Wenn die Absperrschraube vollständig eingeschraubt ist, dann drückt die Öffnungsnadel auf den Teller im Rückschlagventil und hält ihn in offener Position. Das Medium kann so durch das Rückschlagventil fliessen. Wenn man aber den Absperrstopfen für ungefähr zwei Umdrehungen ausdreht, rückt die Öffnungsnadel weg vom Teller des Rückschlagventils, der sich so unter Federkraft und Druckeinfluss schliesst.

Vorteile dieser Lösung sind:

Den Entleerungshahn kann man zwischen dem Betrieb anbringen. So genügt für die gesammte Instalation nur einer.

Weiter kann man mit nur zwei Schraubenumdrehungen des Absperrstopfens den Kanal schliessen. Der Absperrstopfen bleibt dabei noch weiter teilweise ins Gehäuse eingeschraubt und deshalb besteht keine Gefahr, dass er dabei verlorengeht. Die Arbeit ist einfach und anspruchslos.

Der Nachteil ist in der Tatsache, dass der Stopfen nicht ganz dicht ist und etwas Instalationsmedium beim Wechsel verloren geht.

### Problem 6:

Die Einstellelemente sind auf einem Durchmesser angebracht, der kleiner als der Durchmesser der Gegenflansche. Deshalb sind in dem Gegenflansch dementsprechenden zusätzliche Bohrungen angebracht, durch welche die Einstellelemente eingedreht werden können. Der Vorteil ist ein kleiner Durchmesser des Regelventils. Nachteil ist, dass der Flansch nicht standardmässig ist, sondern mit dem Ventil geliefert werden muss.

### Problem 7:

In den bekannten axialen Regelventilen ist eine eingebaute Messdüse, Absperrmutter, Begrenzungsmutter und ein Regler mit einer Mutter für die Einstellung des Differenzdruckes und Durchflusses. Wegen der axialen Ausführung ist eine hohe Kapazität bei kleinem Geräuschpegel und kleinen Abmessungen und zahlreichen Funktionen möglich.

### Problem 8:

In den Regler ist beim Eintritt eine aerodynamisch geformte Messdüse eingebaut, die unabhängig von der Lage des Ventiltellers funktioniert. Die Abnahme des plus und minus Druckes erfolgt durch kreisförmige Spalte, die so angebracht sind, dass sich die Durchflussgeometrie nicht verändert. Jeder Spalt verläuft auf dem gesammten Umfang und nimmt so den Druck aus allen Punkten auf dem Umkreis des gesamten Rohres ab. Der Rand des Spaltes ist scharf und mit höchster Genauigkeit hergestellt. Nebenbei ist der Spalt auch sehr eng und der Rand so geformt, dass er keine zusätzlichen Störungen und Wirbel verursacht. Vor dem Einbau des Reglers in die Rohrleitung kann man in die Düse einen entsprechendes feststehendes Einsatzstück einbauen. Damit kann man die Düsencharakteristik dem vorgesehenen Durchfluss anpassen.

Vorteile nach der Ausführungsform der Erfindung sind folgende:

Es ist nicht erforderlich, die Lage des Ventiltellers zu kennen, und deshalb ist auch kein Stellungsablesemechanismus erforderlich. Wir haben nur eine einzige Konstante des Messers.

Der glatte und enge kreisförmige Spalt gleicht den Einfluss von Turbulenzen in einzelnen Teilen des Rohrquerschnitts aus.

Die Form der Düse, sowie auch die Lage der kreisförmigen Spalte sind so ausgewählt, dass sich die Durchflussgeometrie nur sehr gering ändert. Damit wird auch bei grossen Durchflüssen eine viel höhere Messgenauigkeit erreicht als bei bekannten Ausführungen, zugleich aber auch bei sehr kleinen eine annähernd gleiche.

Mit einem Einsatzstück in der Düse kann eine sehr hohe Genauigkeit auch bei sehr kleinen Durchflüssen erreicht werden. Bekannte Ausführungen mit eingebautem Durchflussmesser haben die Druckabnahme mit einer Bohrung vor und hinter dem Ventilteller ausgeführt.

Die Nachteile dieser Lösung sind:

Der Messer kann nur in ein Handabsperrventil eingebaut werden, da bei einem automatischen Regler die Lage des Tellers nicht fix ist und deshalb eine Messung nicht möglich ist.

Die Bohrungen zur Druckabnahme sind relativ klein und haben den Eintritt in einer relativ rohen gegossenen oder geschmiedeten Gehäusewand. Deshalb ist die Geometrie nicht bei allen Produktserien gleich. Wegen der Kleinheit sind sie sehr den lokalen Turbulenzeinwirkungen im Rohrquerschnitt unterworfen.

Die Geometrie des Strahls auf dem Teller und bei den Öffnungen ändert sich und beeinflusst beträchtlich die Genauigkeit der Messung.

Die Messung ist abhängig von der Lage des Ventiltellers, die genau bekannt sein muss. Toleranzabweichungen bei der Herstellung des Tellers und Mechanismus für die Stellungsablesung können stark die Genauigkeit beienflussen.

Vorteile bekannter Lösungen sind dagegen:

Dass bei stark gedrosseltem Ventil und entsprechend kleinem Durchfluss ein relativ hoher Druckverlust erreicht wird und damit eine relativ sehr genaue Messgenauigkeit auch bei sehr kleinen Durchflüssen erzielt wird.

### Problem 9:

Die Abnahmen des Plus und Minus Druckes werden in der Messkammer ausgeführt und mit einer Gummimanschette getrennt. Auf der Messkammer ist ein Kugelhahn angebracht, die zugleich der Füllung dient. Durch den Hahn wird ein kombiniertes Messröhrchen eingeführt. Das Innere misst dem Minus Druck und muss die Dichtmanschette in der Messkammer durchstechen und in den Bereich des Minusdruckes eintreten. Um das innere Röhrchen ist ein äuseres, das in den Bereich des Plusdruckes vor der Gumimanschette hineinreicht. Der Plusdruck wird weiter als (dp-) Impuls aus der Messkammer durch die Impulsbohrung auf die Membrane des Differenzdruckreglers geleitet, bzw. als (V+) Impuls auf de Membrane des Durchflussreglers.

Vorteile der Ausführungsform der Erfindung sind:

Auf dem Gehäuse ist nur ein Messanschluss erforderlich und eine Absperrrarmatur.

Die Absperrung und Abdichtung nach Aussen gegen den grossen Druck wird mit einem Kugelhahn erreicht, der sich nur bei der Messung öffnet.

Die Gummimanschette muss nur die Differenz zwischen dem Plus und Minusdruck abdichten, die relativ klein (20 bis 30 kPa) ist. Eine absolute Dichtigkeit ist nicht erforderlich. Auch wenn einige Tropfen durch die Dichtung austreten, ist das kein Problem, weil sie im Inneren bleiben.

Die Bohrung für den Plusdruck wird gleichzeitig als Impulsbohrung für die Regelung und als Füllungsbohrung genützt. Anstatt von drei Bohrungen ist nur eine erforderlich.

### Problem 10:

Die Absperrung und Drosselung ist mit einer Absperrmutter ausgeführt, die aus zwei Ringen besteht, die zwischeneinander mit einer trennbaren Zahnkupplung verbunden sind. Auf der inneren Seite ist ein Gewinde, das in das Gewinde auf dem Gehäuse eingreift. Auf dem äusseren Rand dagegen ist eine Verzahnung, in welche die Zähne des inneren Ringes eingreifen. Auf dem äusseren Ring ist eine Skala der ein Zeiger auf dem Gehäuse entgegensteht. Bei der Montage kann man mit Hilfe der Zahnkupplung die Lage des äusseren Ringes genau mit der Nullstellung des Zeigers übereinstimmen, wenn die Lage des inneren Ringes dem Durchfluss gleich Null entspricht. Nach der Montage werden die zwei Ringe dauerhaft verbunden (zusammengeklebt, uA.), so dass sich die Voreinstellung nicht mehr verändern kann. Auf der anderen Seite dagegen, bei maximaler Öffnung, ist der Hub der Schliessmutter mit einer Begrenzungsmutter begrenzt. Auf dem Gehäuse sind unter der Mutter Längsnuten, in welche sich die Schutzschraube niederlässt, die mit einer Begrenzungsmutter befestigt ist. Die Absperr- und die Begrenzungsmutter haben auf der Seite, wo sie sich treffen, jeweils einen seitlichen Zahn. Dieser seitliche Zahn auf der Absperrmutter muss etwas kleiner als der Schritt des Gewindes von dieser sein. So wird die Bewegung der Absperrmutter genau und sicher beendet, wenn sich die Zähne treffen-eingreifen. Bekannte Ausführungen haben nur eine einteilige Mutter, die zugleich dem Schliessen und der Hubbegrenzung dient. Nachteil ist, dass diese Muter versiegelt werden muss und dass nach jeder Schliessung die Plombe entfernt werden muss. Vorteile nach der Ausführungsform der Erfindung dagegen sind folgende:

Die Absperrung und Begrenzung der Öffnung sind voneinander unabhängig. Die Absperrmutter muss nicht plombiert werden.

Der eingestellte Wert der Öffnungsbegrenzung ist deutlich von aussen sichtbar und gesichert gegen eine nicht beabsichtigte Veränderung.

Die Öffnungsbegrenzung ist sehr genau, weil die Nulllage bei der Montage ganz genau mit Hilfe der Zahnkupplung eingestellt ist.

### Problem 11:

Der Membranteller ist eben. Die Entlüftungsbohrung wird in den höchsten Punkt der Pluskammer geführt. Vorteile nach der Ausführungsform der Erfindung sind, dass für die Entlüftung in beiden Einbaulagen eine einzige Entlüftungsschraube genügt. Bekannte Ausführungen haben überhaupt keine Entlüftung oder ist der Membranteller schräg. Nachteile bekannter Lösungen sind folgende:
Mit einer Entlüftungsschraube ist es nicht möglich die Pluskammer bei horizontaler sowie auch vertikaler Einbaulage des Reglers zu entlüften;

Es besteht eine grössere Gefahr einer instabilen Regelung.

### Problem 12:

Der Durchflussregler ist aus den gleichen Bauteilen zusammengebaut wie der Differenzdruckregler. Der Unterschied liegt nur darin, dass der Plusdruck der Messung in die Pluskammer vor der Membrane und der Minusdruck der Messung in die Minuskammer hinter der Membrane muss. Das Gehäuse ist vollständig gleich, nur zwei Bohrungen sind anders ausgeführt. Vorteil nach der Ausführungsform der Erfindung ist in der Vergünstigung der Produktion.

### Problem 13:

Im axialen Ventil kann der Durchmesser des Sitzes erheblich kleiner sein als der Nenndurchmesser des Ventils. Die Verengung aus vollem - normiertem Durchmesser auf den Durchmesser des Sitzes ist in Form einer Düse. Der Druckabfall in dieser Düse ist relativ klein, ist aber Bestandteil des unvermeidlichen Dauerdruckabfalls im Ventil. Wenn man diese schon vorhandenen Düse für die Messung des Durchflusses oder die Steuerung des Durchflussreglers benützt, ändert sich der gesamte Druckabfall dabei nicht. Vorteil nach der Ausführungsform der Erfindung ist, dass wegen der Messdüse der Dauerdruckabfall im Ventil nicht ansteigt. Bekannte Ausführungen benützen für die Steuerung des Reglers den Druckunterschied in einem hydraulischen Wiederstand, der die Form eines Ventils aufweisst uÄ. Nachteil bekannter Lösungen ist, dass der gesammte Druckverbrauch ungefähr zwei bis dreimal höher ausfällt.

### Problem 14:

Das Eintritts- und das Austrittsgehäuse sind mit einer Ringmutter verbunden. So drehen sich bei der Montage nicht die beiden Teile, sondern bewegen sie sich nur nur axial. Vorteile der erfundenen Lösung sind:
Die Federn, die in Form eines Ringes im axialen Regler eingebaut sind, können sich bei der Montage nicht versetzen, weil sie keinen Querkräften ausgesetzt sind;
Das Gehäuse ist bedingt zerlegbar, auch wenn der Regler schon in der Rohrleitung eingebaut ist;
Die Oberfäche der Ringmutter kann auch als Typenschild dienen;

Bei bekannten Lösungen wird das Gewinde direkt in beide Gehäusehälften gedreht, die sich bei der Montage zusammenfügen. Nachteil dieser Lösung ist, dass sich so beide bei der Montage drehen und die Federn umkippen können.

### Problem 15

Auf dem Dichteinsatz ist eine Dichtlippe angebracht, die unter Mediumdruck auf die Fläche des Konus drückt und dadurch dichtet. Das Medium kommt deshalb überhaupt nicht bis zu der Schraube. Vorteil dieser Lösung ist in der erhöhten Zuverlässigkeit der Abdichtung ohne den Gebrauch von zusätzlichen Dichtungen.

### Beschreibung der Konstruktionslösungen

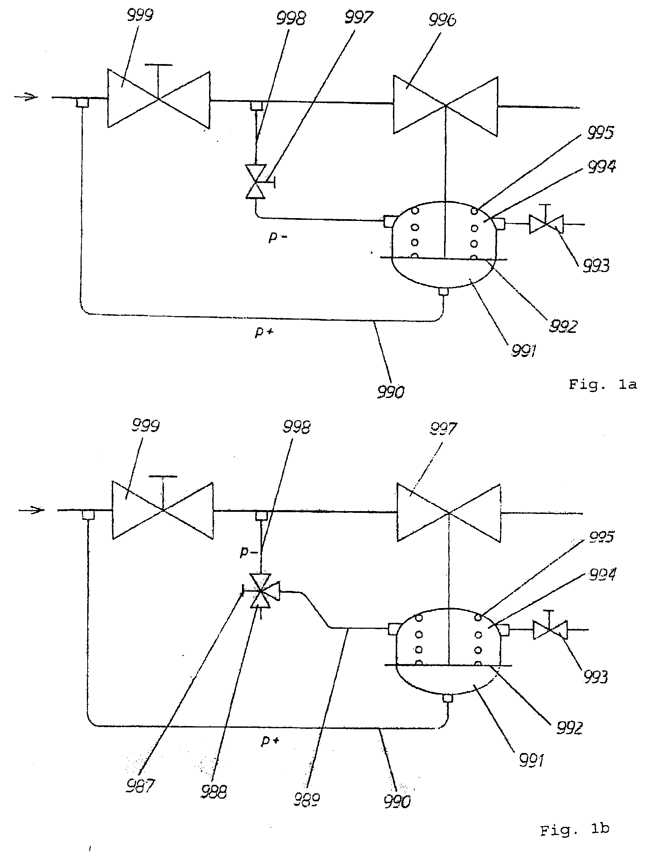

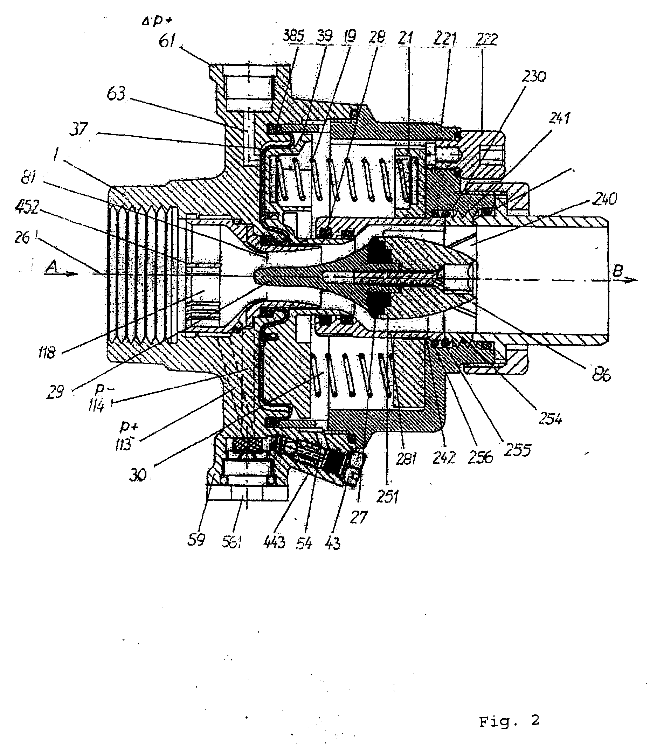

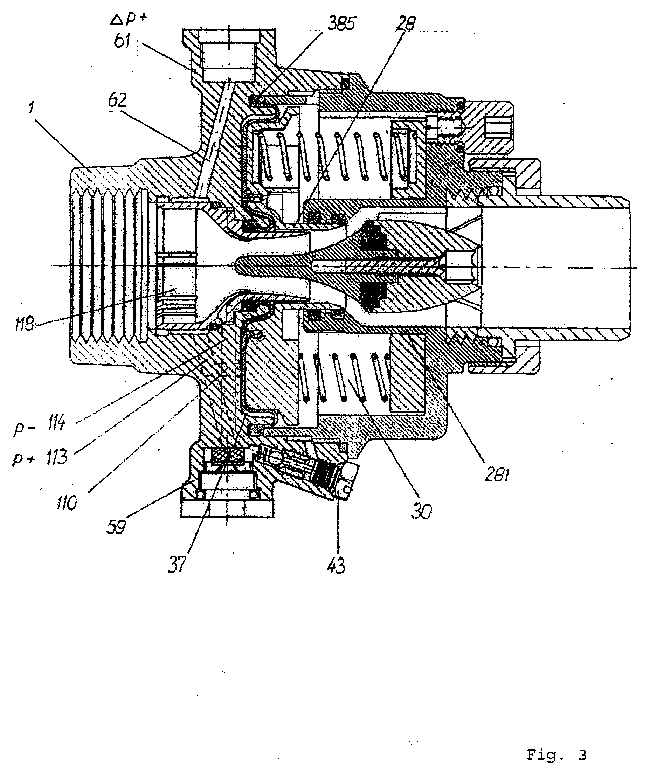

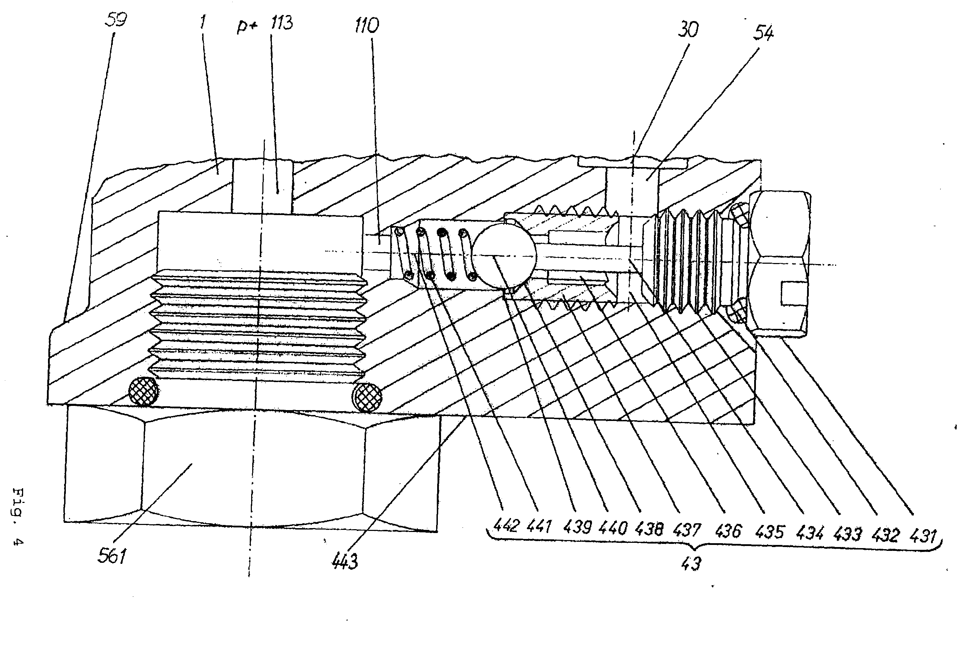

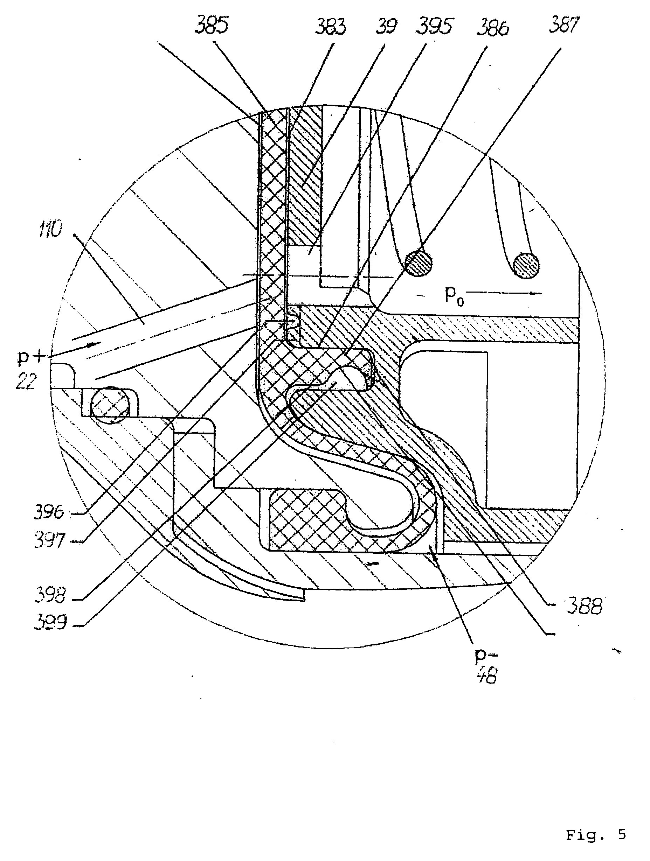

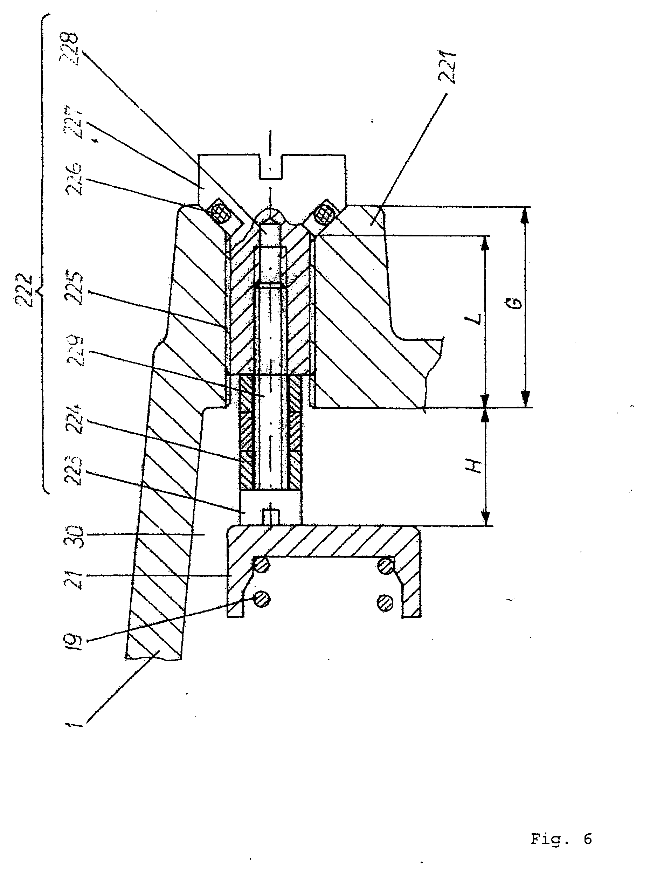

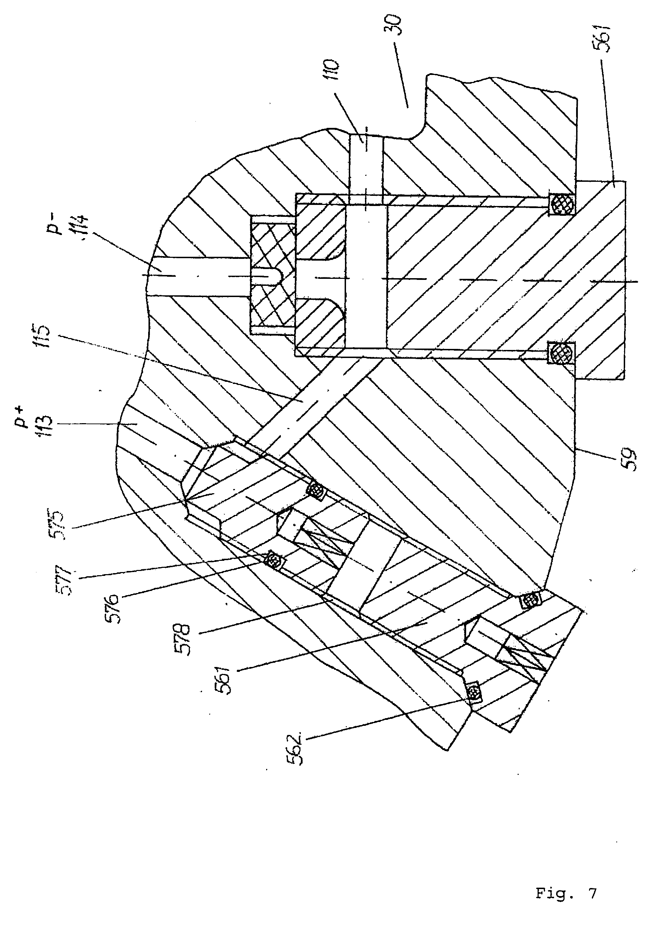

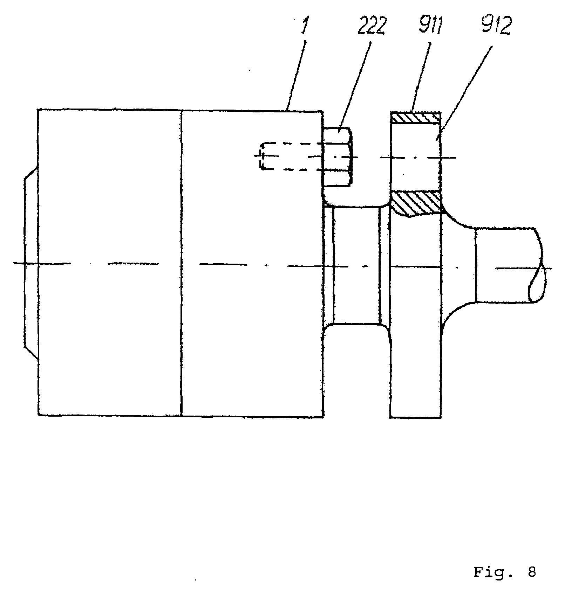

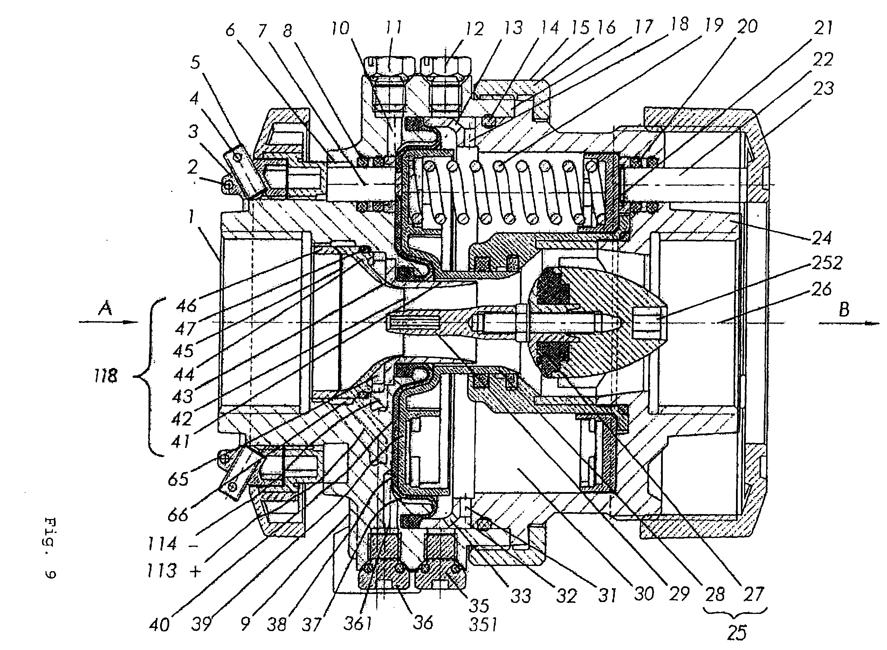

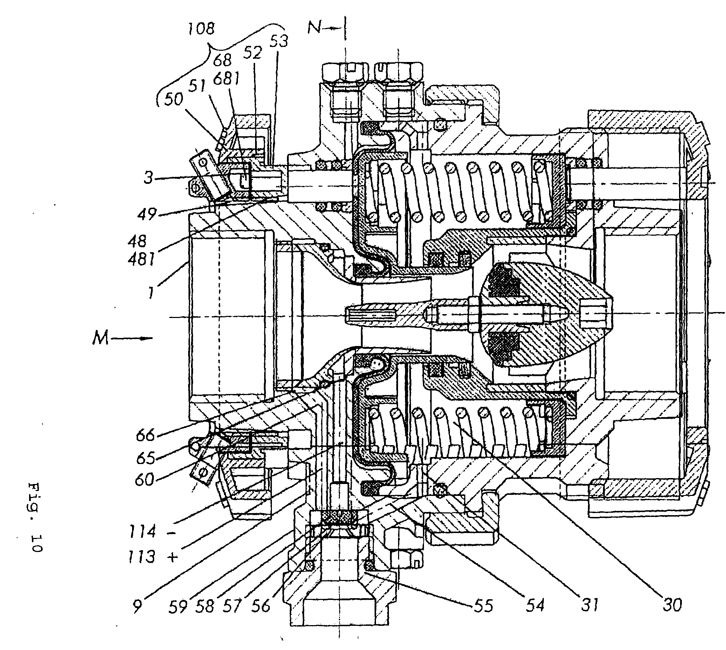

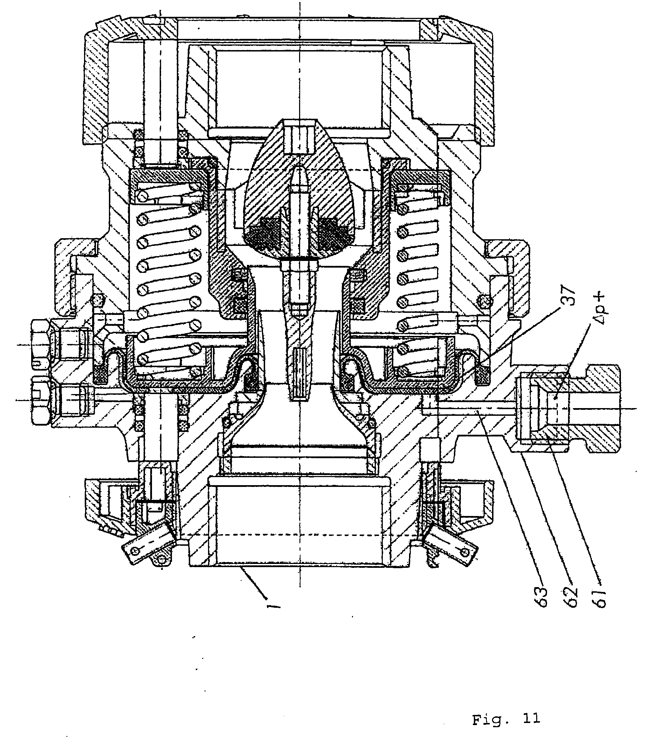

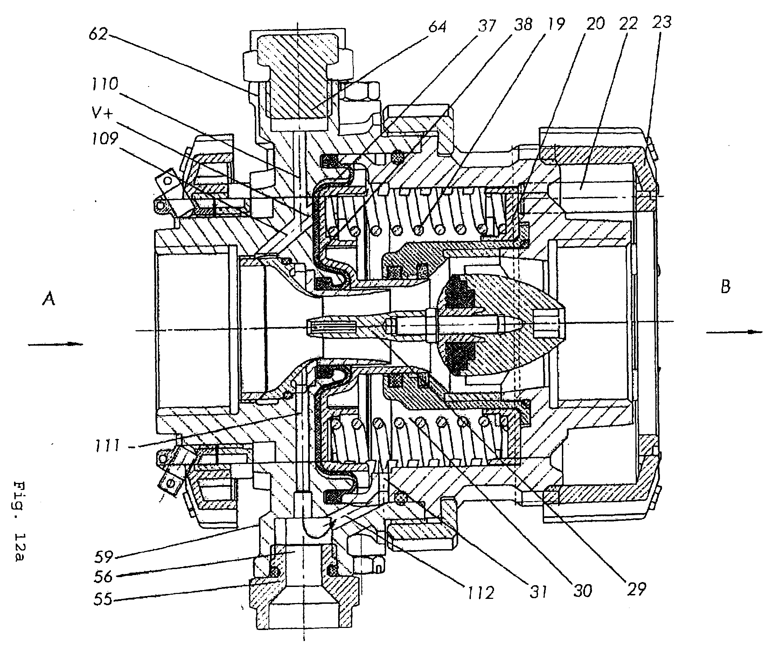

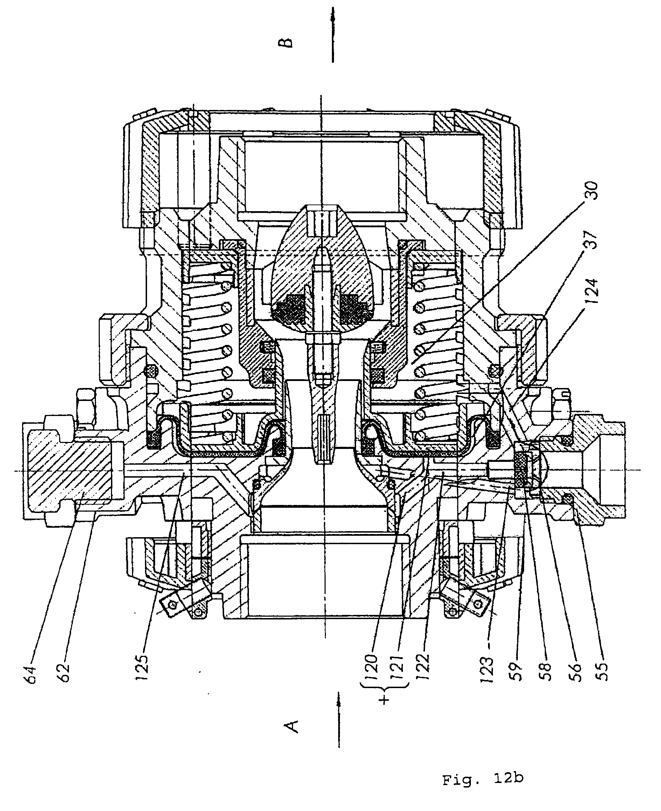

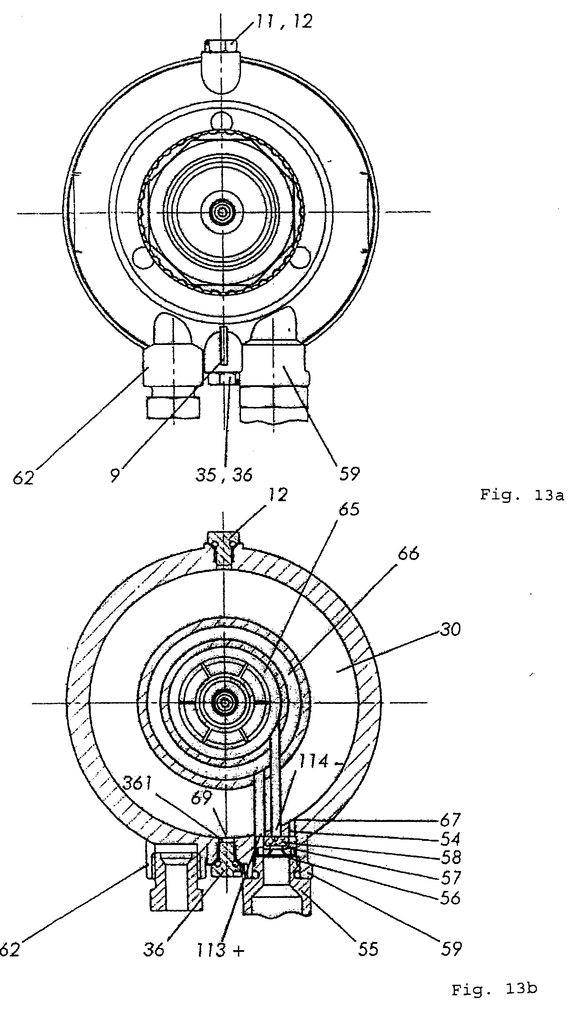

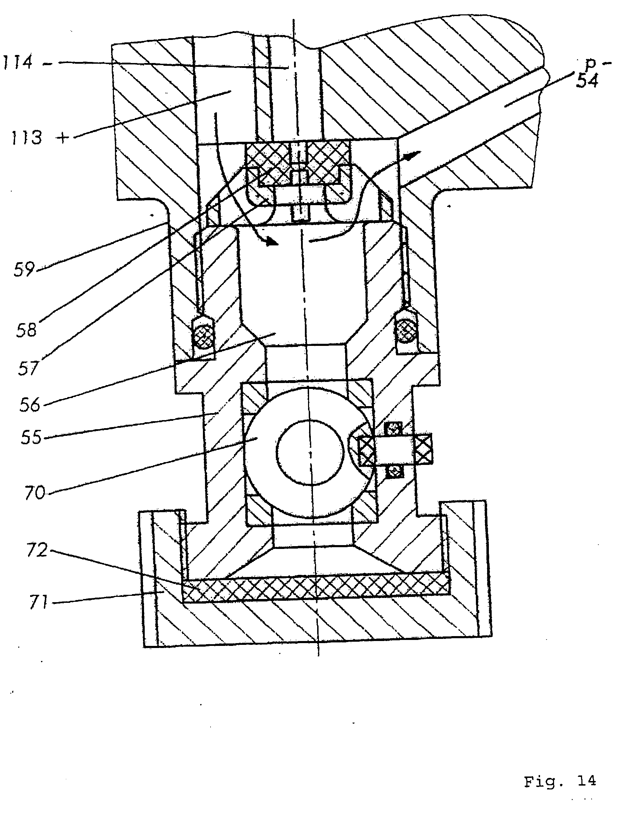

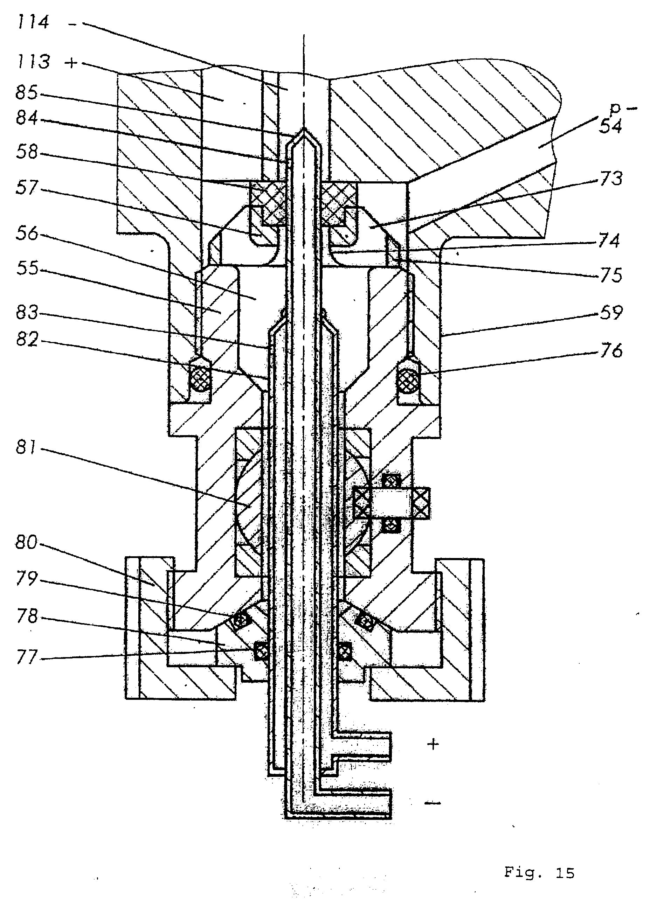

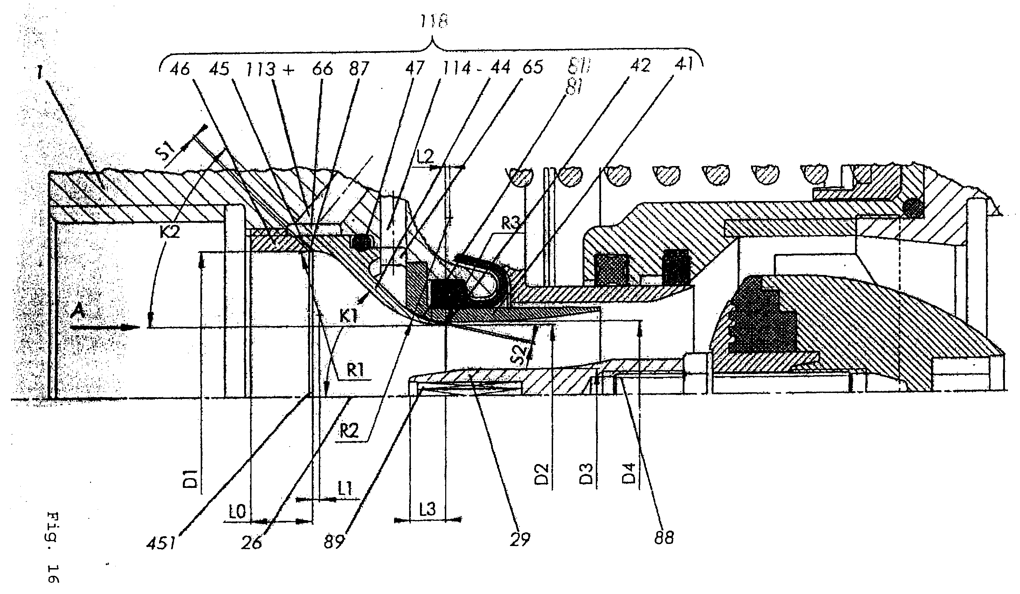

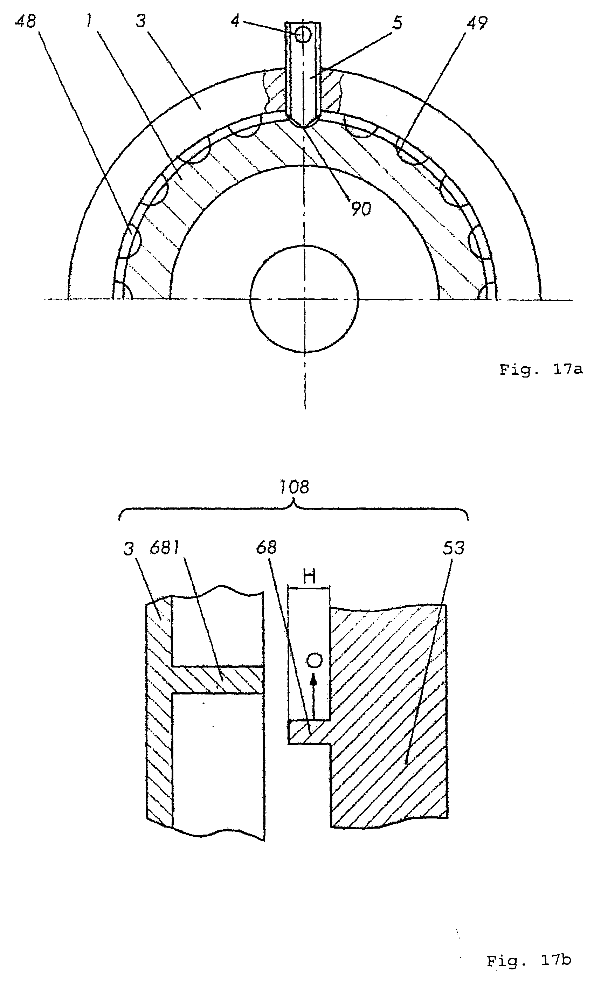

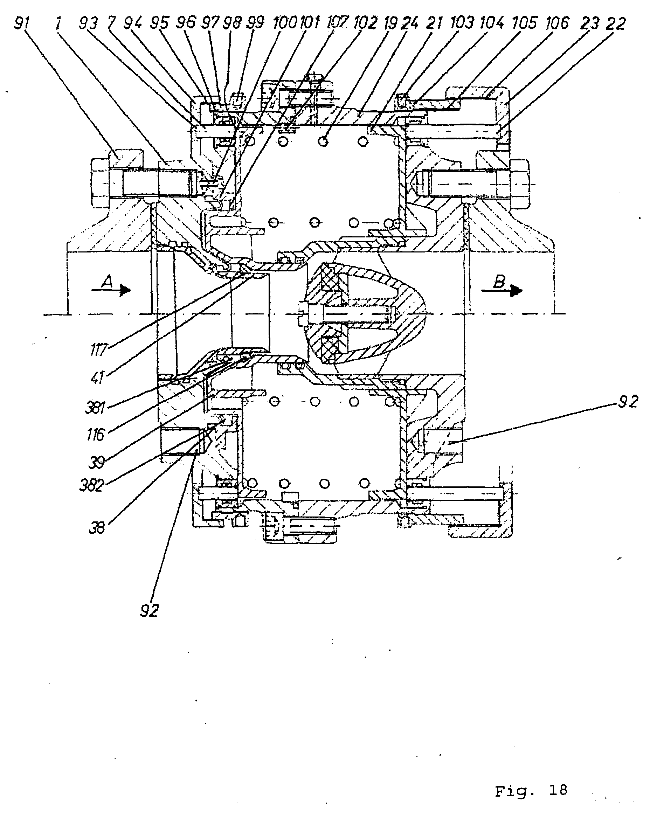

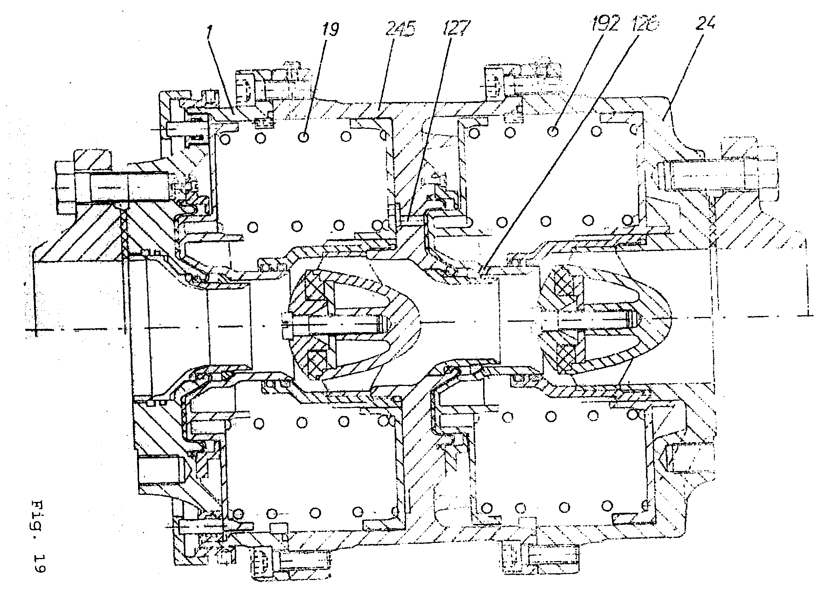

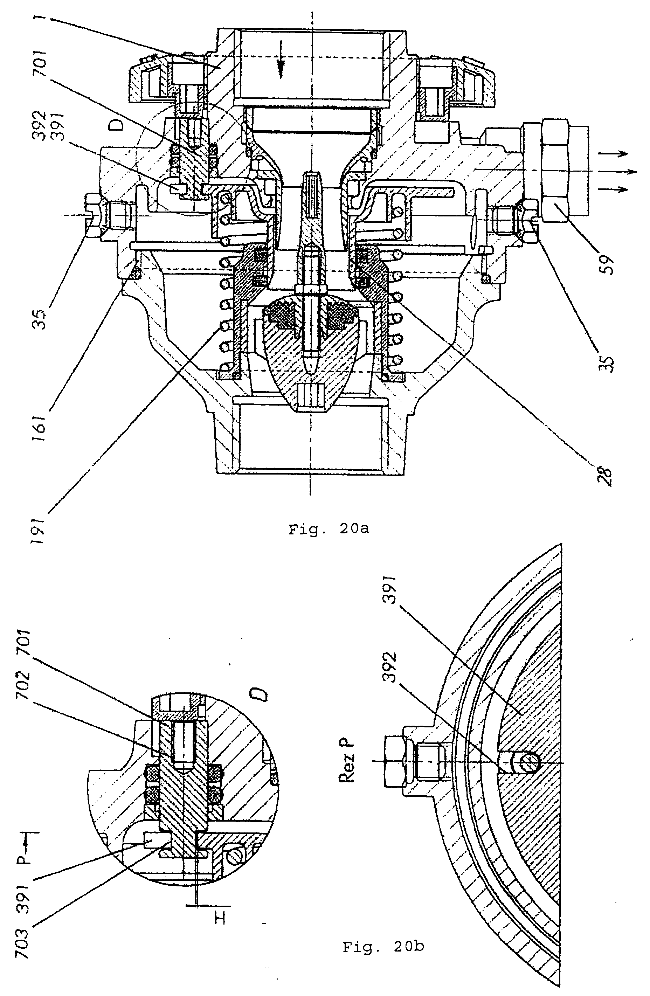

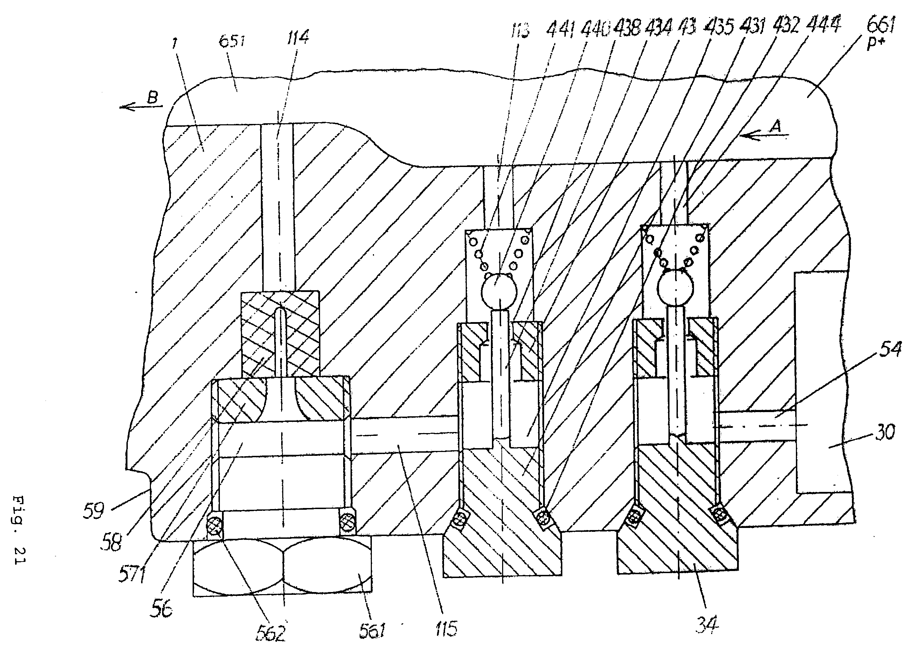

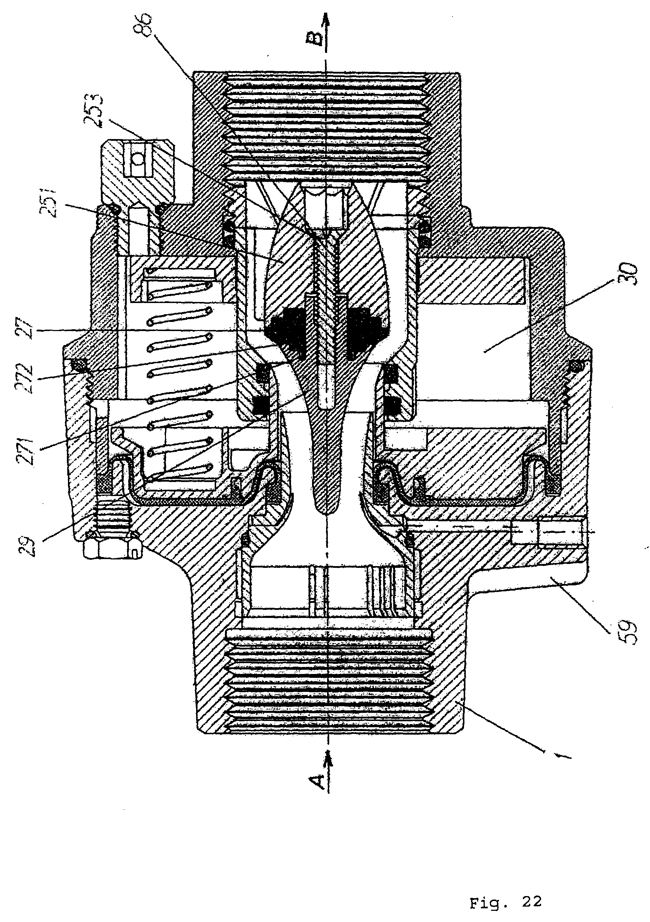

Figur 1
   Zeigt schematisch die Weise der hydraulischen Handabsperrung des Axialregelventils mit Hilfe von Einwegeventilen. Das Drosselventil (999) kann ein Absperrventil oder eine Messdüse sein. Der Plusdruck (p+) wird vor dem Drosselventil durch eine Impulsleitung (990) abgenommen und in den plus Raum (991) der Membrane (992) geleitet und wirkt in Richtung Schliessung des Regelventils (996). Der Minusdruck (p-) wird hinter dem Drosselventil (999) abgenommen und wird durch die Impulsleitung (998) und das Absperrventil (997) in den Minusraum (994) auf der anderen Seite der Membrane (992) geführt, wo er zusammen mit der Feder (995) in Ventilöffnungsrichtung (996) wirkt. Mit dem Füllungsventil (993) kann der Minusraum (6) entleert werden. Bis das Absperrventil (997) geschlossen ist, funktioniert das Regelventil (996) als ein Regler. Wenn man aber das Absperrventil (997) schliesst und das Auslassventil (993) öffnet, fällt der Druck im minus Raum (6) auf Null und der plus Druck (p+) mit Unterstützung der Membrane (992) überwältigt die Kraft der Federn (995) und schliesst das Regelventil (996).
Figur 1b
   Zeigt schematisch die Weise der hydraulischen Handabsperrung des Axialregelventils mit Hilfe eines Dreiwegeventils. Das Drosselventil ist (999). Das Regelventil ist (996). Der plus Druck (p+) wird vor dem Drosselventil abgenommen und durch die Impulsleitung (990) in den Plusraum (991) auf eine Seite der Membrane (992) geleitet und wirkt in Richtung Schliessung des Regelventils (996). Der Minusdruck (p-) wird hinter dem Drosselventil (999) durch die Impulsleitung (998) und das Dreiwegeventil (987) und durch die Impulsleitung (989) in den minus Raum (994) geführt auf die andere Seite der Membrane (992), wo er zusammen mit der Feder (995) in Richtung Öffnen es Regelventils (996) wirkt. Bis das Dreiwegeventil so eingestellt ist, dass die zwei verbundenen Impulsleitungen (998) und (989) geöffnet sind, ist die Auslassrichtung (988) geschlossen, wirkt das Regelventil (996) als Regler. Wenn aber die Impulsrohre (998) geschlossen und die Auslassrichtung geöffnet wird (988), fällt der Druck im Minusraum (994) auf Null und der Plus Druck (p+) mit Unterstützung der Membrane (992) überwältigt die Kraft der Federn (995) und schliesst das Regelventil (996).
Figur 2
   Zeigt den Schnitt durch den Regler des Differenzdruckes mit integrierten Dreiwegeventil. Das Durchflussmedium tritt in Richtung (A) entlang der Längsachse (26) in das Gehäuse (1) ein und tritt in Richtung (B) wieder aus. In den Plusraum (255) tritt durch den Anschluss (61) und die Bohrung (63) der Druck (Δp+) ein und wirkt über die selbstabdichtende Membrane (385) auf den Membranteller (39), auf welchen die Federn (19) anpressen. Der bewegliche Ventilteller (28) ist eigentlich die Verlängerung des Membrantellers. Die bewegliche Konsole (21) ist an das Einstellelement (222) angelehnt, das in die Gehäusewand auf den Ansatz (221) eingeschraubt ist. In der Nut (230), die zugleich der Auslauf des Gewindes (241) ist, sind zwei O-Dichtungen angebracht. Die Dichtung (256) dichtet den Minusraum (48), die Dichtung (255) dient dazu noch als Anlehnung und Schutz für die Dichtung (256) und als Sicherung gegen die Lösung der Verbindung mit dem Gewinde (241) auf dem Ring (254) des Ventiltellers (41). Die Leitansatz (281) wird von aussen in das Gehäuse durch die Austrittsöffnung (240) eingefügt und wird einseitig auf den Ring (242) im Gehäuse angelehnt und auf der anderen Seite auf den Ring (254) des Ventiltellers. Der Rand des Ringes (254) kann rechtwinklig auf die Längsachse (26) sein oder unter einem schrägen Winkel verlaufen. Der Ventilteller (251) wird von aussen in die Austrittsöffnung (240) eingefügt und wird in das Gewinde (241) eingeschraubt. Der Gummieinsatz (27) des Ventiltellers ist mit einem Messkonus (29) angedrückt, der mit einer Schraube (86) befestigt ist. Im Ansatz (443) ist ein Dreiwegeventil (43). Das Medium mit dem Druck (p+) tritt in Richtung (A) in die Öffnungen (452) in der Messdüse (118) ein und fliesst durch den Kanal (113) und einen mit einem Absperrstutzen (561) verschlossenen Messansatz (59) durch das Dreiwegeventil (43) und die Bohrung (44) in den Minusraum (48). Der Minusdruck (p-) aus der Öffnung (81) in der Messdüse tritt durch den Kanal (114) in den Messansatz (59) ein.
Figur 3
   Zeigt einen Durchschnitt durch den Durchflussregler. Gezeigt ist die Variante wenn das Gehäuse (1) aus Kunstoff ausgeführt ist und der Leitansatz (281) in das Gehäuse integriert ist. Der Anschluss (61) und Kanal (62) dient der Druckabnahme (Δp+) im Fall wenn es erforderlich ist, ihn in den Differenzdruckregler einzuführen. Der Plusdruck (p+) aus der Messdüse (118) wird durch die Kanäle (113) und (110) in die Pluskammer (37) geführt. Der Minusdruck (p-) wird durch die Messdüse in den Kanal (114), den Messansatz (59) und durch das Dreiwegeventil (43) in die Minuskammer (48) geführt.
Figur 4
   Zeigt ein Detail des Dreiwegeventils (43). Auf dem Gehäuse (1) ist ein Messansatz (59), der entweder mit einem Stutzen (561) oder einem Entleerungshahn geschlossen ist. Im Ansatz (443) ist das Dreiwegeventil (43) eingebaut. Das Medium mit dem Druck (p+) tritt durch den Kanal (113) in den Messanschluss (59) und durch den Kanal (110) in die Bohrung (442). Danach fliesst es neben den Windungen der Federn (441) vorbei neben dem Ventilteller (440) und dem Dichtrand (438) durch die Bohrung (436) im Sitz (437) in den Zwischenraum (435) und danach durch die Bohrung (44) in den Minusraum (30). Der Sitz (437) ist in das Gewinde (433) eingeschraubt und mit dem Ring (439) gegen das Gehäuse (1) abgedichtet. Der Ventilteller (440) kann die Form einer Kugel oder eines profilierten Konus haben und muss aus einem nichtrostenden Material (rostfreier Stahl, Messing, Gummi, Kunststoff, uÄ. sein). Wenn die Absperrschraube (431) bis zum Ende in den Ansatz (443) eingeschraubt ist, ist der Zwischenraum (435) mit der Dichtung (432) dicht geschlossen. Zugleich drückt aber die Achse (434), die geteilt oder in einem Stück mit der Absperrschraube (431) hergestellt ist, auf den Ventilteller (440) und hält ihn genügend offen für den Durchfluss des Mediums. Wenn die Absperrschraube (431) genügend herausgedreht wird, dass sich die Achse (434) vom Ventilteller (440) abhebt, wird diese unter der Kraft der Feder (441) und des Druckes (p+) dicht geschlossen. Zugleich fliesst das Medium aus dem Minusraum (30) durch die Bohrung (44) in den Zwischenraum (435) und neben der Absperrschraube (431) in die Umwelt. Der Druck in dem Minusraum (30) fällt auf Null.
Figur 5
   Zeigt das Detail der Abdichtung der selbstabdichtenden Membrane (385) im Durchflussregler. Der Druck (p+) tritt durch den Kanal (110) in den Plusraum (37) und drückt auf die Membrane (385). Der Druck (p-) wirkt dagegen auf die Minusseite (383) der Membrane. Wenn es keinen Durchfluss gibt, sind die Drücke (p+) und (p-) gleich. Wenn die Membrane auf der Minusseite (383) nicht abgedichtet wäre, würde auf beide Seiten der Membrane der gleiche Druck wirken und mit dem Entleeren des Minusraumes (30) könnte eine Ventilabsperrung nicht realisiert werden. Deshalb ist auf der Minus Seite (383) der Membrane (385) ein Dichtring (387) angebracht, der mit der Dichtfläche (386) und der Dichtlippe (388) unter Druckeinfluss (p-) auf die Wand des Nutes (399) im Membranteller (39) drückt. Wenn der Minusraum (30) entleert wird, fliesst das Medium aus der Nut (399) durch radiale Kanäle (397), die in den kreisförmigen Kanal (396) und danach durch die Bohrungen (395) in den Minusraum führen. Die Nut (399) ist etwas breiter als der Dichtring (387), so dass dazwischen ein Spalt (398) ist, was eine einfache Montage und einen sicheren Zutritt des Druckes (p-) zum Dichtring (387) ermöglicht. Vor dem Einbau ist die Fläche des Dichtrings (387), bzw. der Hügel der Dichtlippe (388), höher als die Tiefe der Nut (399). Nach dem Einbau drückt sich die Membrane (385) unter Einfluss der Drücke (p+) und (p-) auf den Membranteller (39). Deshalb biegt sich die Dichtlippe (388) und drückt auf den Grund der Nut (399). Damit wird die Wirkung der Dichtung erheblich verbessert.
Figur 6
   Gezeigt wird das Detail der Einstellung der Federn mit Hilfe von fixen Einstellplättchen. In den Ansätzen (221) auf dem Gehäuse (1) ist in der Gewindebohrung (225) ein Einstellelement (222) eingeschraubt, das aus einer Stirnschraube (223), Distanzplättchen (224), einer Andrückschraube (227) und einer Dichtung (226) besteht. Wenn die Andrückschraube (227) bis zum Ende in den Ansatz (221) geschraubt ist, wird die Gewindebohrung (225) mit der Dichtung (226) nach aussen abgedichtet und die Stirnschraube (223), die dicht in das Gewinde (228) eingeschraubt ist, in der Andrückschraube (227) drückt auf die bewegliche Konsole (21) auf die Hauptfeder (19). Die Kompression (H) der Hauptfeder (19) ist davon abhängig, wieviele Distanzplättchen (224) zwischen die Stirn- und Andrückschraube eingesetzt sind. Wenn man die Kompression der Federn (19) verändern will, öffnet man das Dreiwegeventil und schliesst damit den Minusraum (30). Danach kann man die Andrückschraube ausschrauben und die Anzahl der Distanzplättchen verändern. Es ist von Vorteil, dass das letzte Distanzplättchen (229), das die Andrückschraube berührt, auf innerer Seite ein Gewinde besitzt. Damit wird ein Auseinanderfallen der Distanzplättchen bei der Demontage verhindert.
Figur 7
   Zeigt das Detail des Einbaus der Absperrschraube (575) in den Kanal (113), durch welchen der Plusdruck (p+), über den Verbindungskanal (115) in den Messansatz (59) übergeht und durch den Kanal (110) weiter in den Minusraum (30). Die Absperrschraube (575) hat für eine bessere Abdichtung in der Nut (577) eine zusätzliche Dichtung eingebaut (61) und ist in das gleiche Gewinde (578) wie der Absperrstutzen (561) eingeschraubt, der eine statische Dichtung (562) besitzt. Wenn man die Absperrschraube (575) zudreht, kann man anstatt des Stutzens (561) einen Entleerungshahn oder Messansatz einschrauben.
Figur 8
   Zeigt den Anbau der Einstellelemente (222) im Gehäuse (1). In dem Gegenflansch (911) sind Bohrungen (912) angebracht, die eine Einschraubung der Einstellelemente (222) ermöglichen auf einem Durchmesser, der kleiner als der des Gegenflansches (911) ist.
Figur 9
   Zeigt den Durchschnitt durch den Differenzdruckregler. Das Durchflussmedium tritt in Richtung (A) in die Eintrittskammer (1) ein und tritt in Richtung (B) durch die Austrittskammer (24) wieder aus. In der Begrenzungsmutter (3) ist eine Plombierbohrung (2) angebracht und eine Sicherungsschraube (5) mit einer Plombierbohrung (4). Die Absperrachse (7) ist hinter dem Schutzring (6) versteckt und mit einer Dichtung (8) abgedichtet. Der Zeiger ist (9). Die Entlüftungsbohrung (10) für die Pluskammer (37) ist mit einer Entlüftungsschraube (11) verschlossen und liegt bei vertikaler und horizontaler Einbaulage des Gehäuses immer auf dem höchsten Punkt der Kammer. Die Entlüftung der Minuskammer (30) ist durch die Bohrungen (13) und (18), den Entlüftungs/Auslasskanal (32) und die Entlüftungsschraube (12) ausgeführt. Beide Gehäusehälften sind mit einer Ringmutter (16) verbunden und mit der Hauptdichtung (14) abgedichtet. Die äussere Oberfläche (15) kann auch als Typenschild dienen. Die Stirnkontaktfläche (17) beider Gehäusehälften ist rauh oder genarbt hergestellt, damit eine evtl. Verschiebung/Verdrehung ins Gehäuse bei der Eindrehung des Rohres verhindert wird. Die Schraubenfedern (19) sind ringförmig entlang des Ringes der Minuskammer (30) angebracht. Auf die Federn wirkt über die Konsole (21) und die Einstellachsen (22), die mit einer Dichtung (20) abgedichtet ist, eine Einstellmutter (23). Die Absperr- und Einstellachsen sind mindestens drei. Die Sechskantbohrung (252) dient zum Halt des Ventiltellers (27) bei der Montage des Einsatzstückes (29). Die Längsachse des Gehäuses ist angezeigt mit (26). In der Minuskammer (30) ist ein Ventilsitz (28), der zusammen mit dem Ventilteller (27) das Ventil (25) bildet. Der Membranteller ist (39). Auf ihn drückt die Membrane (38). Der Auslass der Minuskammer verläuft durch die Bohrungen (31) und (33) in den Kanal (32) und die Auslassbohrung (351), die mit einer Schraube (86) verschlossen wird. Die Pluskammer (37) hat eine querlaufende Wand (40), die rechtwinklig auf die Achse (26) ist oder etwas geneigt mit dem äusseren Rand zu der Eintrittsrichtung (A) ist und eine Auslassbohrung (361), die von einer Auslassschraube (36) verschlossen wird. Der Kanal zur Minusdruckabnahme (-) aus dem Raum (65) auf der Messdüse ist mit (114) angedeutet und der Kanal für den Plusdruck (+), der in dem Raum (66) abgenommen wird, mit (113). Die Messdüse (118) besteht aus drei Teilen: aus dem Austritts- (41), dem Mittel-(44) und dem Eintrittsring (46). Hinter dem Rand (42) ist ein Spalt (81) für die Abnahme des Minusdruckes. Der Spalt für die Abnahme des Plusdruckes (45) ist entgegen dem Minusdruckbereich mit einer Dichtung (47) abgedichtet.
Figur 10
   Gezeigt wird das Detail der Absperrmutter und des Messanschlusses. Die Absperrmutter (108) besteht aus dem inneren Ring (53), der mit dem Gewinde (481) in das Gewinde (48) auf dem Eintrittsgehäuse (1) verschraubt ist, und aus einem äusserer Ring (50). Beide Ringe sind mit einer zerlegbaren Zahnkupplung (52) verbunden. Nach der Einstellung der richtigen Lage der Skala (51) entgegen dem Zeiger (9) werden die beiden Ringe dauerhaft verbunden (zusammengeklebt). Die Längsnuten (49) für die Sicherung der Begrenzungsmutter (3) sind entlang des Umfanges des Eintrittsgehäuses (1) kreisförmig angeordnet. Der Plusdruck (+) wird aus dem Raum (66) durch die Kanäle (60) und (113) direkt in die Messkammer (56) in dem Messanschluss (59) eingeführt und danach durch die Bohrungen (54) und (31) in die Minuskammer (30). Die Messkammer wird mit einem Kugelhahn (55) geschlossen. Der Minusdruck (-) wird aus dem Raum (65) durch die Bohrung (114) geführt und gegen dem Plusdruckbereich mit der Dichtungsmanschette (58), auf welche der sternförmige Ring (57) andrückt.
Figur 11
   Gezeigt wird das Detail des Anschlusses für den Druck (dp+). Auf dem Gehäuse (1) ist ein Ansatz (62). Der Druck (Δp+) wird ausser dem Gehäuse (1) vor dem Impulsanschluss (61) durch die Impulsbohrung (63) in die Pluskammer (37) geleitet.
Figur 12a
   Gezeigt wird der Durchflussregler. Dieser unterscheidet sich vom Regler des Differenzdruckes nur nach der Art der Leitung der einzelnen Drücke auf die Membrane (38) und durch die Kraft der Federn (19). Der Plusdruck (+) aus der Messdüse wird durch die Bohrung (109) in die Pluskammer (37) geleitet, zugleich aber auch durch die Bohrung (110) in den Ansatz (62), wo der Entleerungshahn (64) oder nur der Messanschluss bzw. Verschlussstopfen ist. Der Minusdruck (-) aus der Messdüse wird durch die Bohrung (111) in den Messansatz (59) eingeführt und in die Messkammer (56) und daraus durch die Bohrungen (112) und (31) in die Minuskammer (30). Der Absperrhahn ist (55). Auf die Regelfedern (19) drückt über die Konsole (24) und die Einstellachsen (22) die Einstellmutter (23). Durch eine Änderung der Komprimierung der Federn (19) wird der Durchfluss eingestellt. Der Einstellungsbereich kann durch den Einbau eines entsprechenden Einsatzstückes (29) reduziert werden. Das Einsatzstück kann nur vor dem Einbau in die Rohrleitung eingesetzt werden. Mit ihm wird eine sehr genaue Messung und Regulierung auch bei sehr kleinen Durchflüssen erreicht.
Figur 12b
   Gezeigt wird der Durchflussregler, bei welchem der Plus (+) sowie auch der Minusdruck (-) in den gleichen Ansatz (59) geführt werden. Der Ansatz (62), den ein Füllungshahn (64) oder einfach nur ein Stopfen schliesst, dient dem Auslass über die Bohrung (125). Der Plusdruck (+) tritt über die Kanäle (120) und (121) in die Pluskammer (37) und reicht über die Bohrung (122) bis zur Gummimanschette (58). Der Minusdruck (-) tritt dagegen durch die Bohrung (123) in die Messkammer (56) und weiter durch die Bohrung (124) in die Minuskammer (30) ein. Der Ansatz (59) wird mit einem Entleerungshahn (55) geschlossen.
Figur 13a
   Gezeigt werden die Ansicht M und der Schnitt N aus Figur 2. In der Ansicht M wurden wegen besserer Übersicht die Begrenzungs- und Absperrmuttern entfernt. Die Entlüftungsschrauben (11) und (12) sind oben auf dem höchsten Punkt angebracht. Die Auslassschrauben (35) und (36) befinden sich dagegen unten auf niedrigstem Punkt des Reglers. Der Ansatz (59) ist unten rechts, der Ansatz (62) unten links. Der Zeiger ist (9).
Figur 13b
   Gezeigt wird der Schnitt N aus der Figur 2 und ist wegen besserer Übersicht schematisch gezeichnet. Die Entlüftungsschraube (12) ist oben auf dem höchsten Punkt der Minuskammer (30) angebracht. Aus dem Raum (66) wird der Plusdruck (+) durch die Bohrung (113) in die Messkammer (56) im Ansatz (59) geleitet, danach aber noch weiter durch die Bohrung (54) und die Mündung (67) in die Minuskammer (30). Der Minusdruck (-) wird aus dem Raum (65) durch die Bohrung (114) bis zur Gummimanschette (58) geführt, die ein sternförmiger Ring (57) hält. Der Entleerungshahn ist (55). Auf dem niedrigsten Punkt der Minuskammer (30) ist eine Mündung (69) der Auslassbohrung (361), die eine Auslassschraube (36) schliesst. Der Ansatz auf der unteren linken Seite ist mit (62) markiert. Für einen gründlichen Auslass und Spülung von evtl. Verunreinigungen ist es wichtig, dass beide Mündungen (67) und (69) so weit wie nur möglich voneinander entfernt sind und keinesfalls in einem Punkt vereinigt sind.
Figur 14
   Gezeigt wird der geschlossene Entleerungshahn auf dem Messansatz (59). Der Plusdruck (+) tritt durch die Bohrung (113) vorbei am sternförmigen Ring (57), die Gummimanschette (58) in der Messkammer (56) und danach durch die Bohrung (54) als (Δp-) Druck in die Minuskammer. Der Minusdruck (-) drückt durch die Bohrung (114) auf die Gummimanschette (58). In dem Hahn (55) ist das Schliessunsglied (70) in geschlossener Lage gezeichnet. Der Auslass aus dem Hahn ist zusätzlich mit der Dichtung (72) abgedichtet, auf die der Deckel (71) andrückt.
Figur 15
   Gezeigt wird der Messansatz (59) mit dem Entleerungshahn (55) in offener Lage und mit eingestochenem Messröhrchen (85). Der Plusdruck (+) tritt durch die Bohrung (113) vorbei neben dem sternförmigen Ring (57) in die Messkammer (56) und danach durch die Bohrung (54) als (Δp-) Druck in die Minuskammer. In der Spitze des Messröhrchens (85) ist eine Öffnung (84), durch welche der Minusdruck (-) aus der Bohrung (114) eintritt. Rund um das Messröhrchen (85) ist konzentrisch das plus Messröhrchen (82) mit der Öffnung (83) für den Eintritt des Plusdruckes (+) angebracht. Das Minusmessröhrchen wird durch die Gummimanschette (58) eingeführt und reicht in die Bohrung (114) hinein. Das Plusmessröhrchen reicht dagegen nur in in die Messkammer (56) und ist nach Aussen mit der Dichtung (77) abgedichtet, das in den Dichteinsatz (78) eingelegt ist und mit der Dichtung (79) abgedichtet und mit der Mutter (80) befestigt ist. Der Füllungshahn (55) ist mit der Dichtung (76) abgedichtet und ist in den Ansatz (59) genau soviel eingeschraubt, dass über den sternförmigen Ring (57) dicht die Gummimanschette (58) auf den Rand der Bohrung (114) drückt. Das Schliessungsglied (70) ist in offener Position gezeichnet. Die Rippen des sternförmigen Ringes sind mit (73) angedeutet. Ihre innere Flanke (74) ist abgerundet, damit sich das Minusmessröhrchen bei der Einfügung zentriert. Der Rand (75) des Ringes verbindet und verstärkt die Rippen des sternförmigen Ringes.
Figur 16
   Gezeigt wird ein Detail der Messdüse (118). Das Medium tritt in Richtung (A) durch den Nenndruchmesser des Ventils (D1) im Eintrittsring (46) ein und fliesst danach vorbei am mittlerem Ring (44) durch den Durchmesser (D2) und vorbei am Austrittsring (41) durch den Durchmesser (D4). Der Plusdruck (+) tritt neben dem scharfen Rand (87) in den Plusspalt (45) ein, der die Breite (S1) hat und der entgegen der Achse (26) für den Winkel (K1) geneigt ist in den Raum (66) und von hier in die Bohrung (113). Der Eintrittsring ist in die Eintrittskammer (1) eingeschraubt und drückt auf die Distanzzähne (451), die auf den mittleren Ring angegossen sind. Damit wird die Präzision und Zuverlässigkeit des Spaltes (45) gesichert. Der Mittlere Ring (44) verengt sich entsprechend dem Winkel (K2) und ist mit dem Halbmessern (R1) und (R2) abgerundet. Der Minusdruck (-) tritt vorbei am scharfen Rand (42) und dem Halbmesser (R3) durch den Minusspalt (81), der die Breite (S2) hat und mit den Zähnen (811) gesichert ist, in den Raum (65) und daraus in die Bohrung (114). Der Rand (87) des Plusspaltes (45) ist vom dem Anfang des Eintrittsringes (46) für (L0) entfernt. Die Mitte des Halbmessers (R1) ist vom Rand (87) entfernt für (L1). Der Rand (42) auf dem mittleren Ring ist von der Mitte des Halbmessers (R2) für (L2) entfernt. Das Einsatzstück (29) ist in die Schraube (88) mit der Hilfe einer sechskantigen Bohrung (89) befestigt, die den Durchmesser (D3) hat. Die Stirn des Einsatzes ist mit dem Radius (R4) abgerundet und reicht für (L3) vom Rand (42) in den mittleren Ring (44). Zwischen den Räumen (65) und (66) ist eine Dichtung (47), die den plus und minus Druck voneinander trennt.
**Figur 17a**
   Gezeigt wird das Detail der Sicherung der Begrenzungsmutter (3), die auf die Eintrittskammer (1) mit Hilfe des Gewindes (48) angeschraubt wird. Die Sicherungsschraube (5) mit der Plombierbohrung (4) ist so tief eingeschraubt, dass ihre Spitze (90) in die Längsnut (49) reicht, die tiefer als das Gewinde (48) ist und damit eine Veränderung der Einstellung verhindert.
**Figur 17b**
   Zeigt schematisch den Begrenzungszahn (68) auf dem inneren Ring (53) der Absperrmutter (108) und den Begrenzungszahn (681) auf der Begrenzungsmutter (3). Beim Öffnen bewegt sich der Ring (53) in Richtung (O) so lange, bis der Zahn (68) nicht den Zahn (681) auf der Begrenzungsmutter (3) trifft. Dabei ist es wichtig, dass die Höhe (H) etwas kleiner als der Schritt des Gewindes (48) ist und dass der Gewindeanfang auf dem Begrenzungsring so positioniert entgegen dem Gewinde auf dem inneren Ring (53) ist, dass sich beide Zähne vor den zwei Flanken des inneren Ringes (53) mit der Begrenzungsmutter (3) treffen. Damit ist eine dauerhaft genaue Einstellung garantiert, die nicht von der Kraft der Festziehung der Abspermutter abhängig ist.
Figur 18
   Zeigt die Flanschversion des Differenzdruckreglers, die besonders für grössere Ventile geeignet ist. Das Medium tritt durch den Gegenflansch (91) in Richtung (A) in das Eintrittsgehäuse (1) ein und tritt in Richtung (B) aus dem Austrittsgehäuse (24). In beiden Gehäusehälften sind blinde Gewindebohrungen (92) für die Gewindeverbindung mit dem Gegenflansch. Die Differentialmutter (97) bewegt axial die Absperrmutter (94), die auf die Absperrachsen (7) andrückt. In der Absperrmutter sind blinde Bohrungen (93), in welche die Absperrachsen (7) eingesetzt sind. Damit ist die Absperrmutter gegen Verdrehung gesichert. Die Absperrachse (7) ist gegen den Ausfall mit einem Sicherungsring (98) abgesichert. Die Absperrmutter hat ein rechtes Gewinde (95). Die Differentialmutter (97) hat auf der äusseren Seite ein rechtes Gewinde (95) und auf der inneren ein linkes Gewinde (96). Die Schraube (99) sichert die Differentialmutter (97) gegen eine nichtbeabsichtigte Lösung der Verbindung. Die Membrane (38) wird auf dem äusseren Rand in die Eintrittskammer (1) mit einem Befestigungsring (101), der eine Anlehnung (107) hat und mit Schrauben (100) in das Eintrittsgehäuse (1) befestigt. Die Scheitel der äusseren Welle der Membrane ist mit (382) gekennzeichnet. Den Hub des Membrantellers (39) begrenzt eine Anlehnung (102). Die Einstellmutter (23) drückt auf die Einstellachsen (22), die über eine Konsole (21) auf die Federn (19) drückt. Die Einstellmutter hat ein rechtes Gewinde (106), die Differentialmutter (104) dagegen hat auf der äusseren Seite ein rechtes (106) und auf der inneren Seite ein linkes Gewinde (105). Die Schraube (103) sichert die Differentialmutter (104) gegen unbeabsichtigte Lösung der Schraubverbindung. Auf dem Austrittsring (41) ist mit dem Gewinde (117) eine Anlehnung (116) befestigt die dem Schutz der Membrane (38) dient. Der Scheitel der innern Welle ist (381). Falls die Membrane auf der Plus Seite mit dem grössten noch zulässigen Druck belastet ist, kann sie sich nur bis zur Anlehnung ausdehnen. Ein weiterer Druckanstieg hat keinen Einfluss auf die Ausdehnung der Membrane mehr. Die Membrane muss wenn das Ventil vollständig geöffnet ist von der Anlehnung um die Hälfte des Ventilhubes entfernt sein und dazu noch für die Membranausdehnung bei dem höchsten zulässigen Druck.
**Figur 19**
   Zeigt die Kombination des Differenzdruck- und des Durchflussreglers. Die Eintrittskammer (1) und Austrittskammer (24) sowie die restlichen innernen Teile sind gleich wie bei dem Differenzdruckregler. Zusätzlich wird eine mittlere Kammer (245) eingefügt und noch ein Regler des Differenzdruckes, der mit Unterstützung von Federn (192) und mit der Abnahme des minus Impulses durch die Bohrung (126) und den Plusimpuls durch die Bohrung (127) als ein Durchflussregler wirkt. Eine Einstellachse und -Mutter ist hier nicht erforderlich.
**Figur 20a**
   Zeigt ein Multifunktionales Regelventil mit begrenzter Auswahl von Funktionen. Eingebaut sind nur folgende Funktionen: Durchflussmessung, Absperrung, Öffnungsbegrenzung und Auslass. Die Eintrittskammer (1) hat auf der unteren Seite nur einen Messansatz (59) und eine Auslassschraube (35). Beide Gehäusehälften sind direkt mit einem Gewinde (161) ohne zusätzlicher Ringmutter verbunden. Anstatt eines Ringes von Schraubenfedern ist nur eine einzige Schraubenfeder (191) eingebaut. Der Teller ist eigentlich nur eine Verlängerung des Ventiltellers (28) und hat auf dem Rand Nute (392) in welche die Absperrachsen (701) eingreifen.
**Figur 20b**
   Zeigt das Detail der Absperrachse für das Ventil gemäss dem Figur 20a. Die Absperrachse (701) hat einen Nut (703) in welchen der Teller eingreift (391). Wenn das Gehäuse (1) aus Metall und der Teller (391) aus Kunststoff ist muss wegen der Kompensierung der Temperaturausdehnungen in der Nut (703) zwischen der Absperrachse (701) und dem Teller (391) etwas Luft (H) sein, dass damit eine radiale Ausdehnung des Tellers möglich ist.
**Figur 21**
   Zeigt schematisch die Ausführung der Dreiwegeventile für die hydraulische Absperrung der Durchflusses und für die Absperrung der Zufuhr in den Entleerungshahn. Im Gehäuse (1) ist ein Messansatz (59) in welchen der Mess-Entleerungshahn (56) und das Dreiwegeventil (43) eingebaut ist. Das Medium mit dem Druck (p+) tritt in Richtung (A) in den Raum (661) ein und mit dem Druck (p-) aus durch den Raum (651) in Richtung (B). Der Druck (p-) im Raum (651) tritt durch den Kanal (114) bis zur Dichtmanschette (58), die in das Gehäuse dicht mit einer Mutter (571) befestigt ist. Die Mess-Füllkammer (56) schliesst normal ein Absperstutzen (561) der mit der Dichtung (562) abgedichtet wird. Das Medium mit dem Druck (p+) tritt aus dem Raum (661) durch den Kanal (113) vorbei neben der Feder (441) des Ventiltellers (440) zwischen dem Sitz (438) im Einsatz (437) und die Öffnungsnadel (434) in den Zwischenraum (435). Von hier aus verläuft es durch den Verbindungskanal (115) in die Mess-Füllkammer (56). Die Öffnungsnadel (434) ist in der Absperrschraube (435) angebracht, die mit einer Dichtung (432) abgedichtet ist. Das komplete Dreiwegeventil für die Schliessung des Kanals (113) ist mit (43) gekennzeichnet. Zugleich tritt das Medium mit dem Druck (p+) durch den Kanal (444) und das Dreiwegeventil (251) in den Kanal (54) und den Minusraum (29), wo er der Regelung dient. Wenn wir anstatt des Stutzens (561) zwischen dem Betrieb unter vollem Arbeitsdruck (p+) einen Mess-Entleerungshahn einbauen wollen, muss die Zuleitung des Mediums in die Mess-Füllkammer verschlossen werden. Dies geschiet so, dass man für ungf. zwei Umdrehungen die Absperrschraube (435) öffnet. Die Öffnungsnadel (434) rückt vom Ventilteller (440) ab, der auf den Sitz (438) eintrifft und ihn unter Kraft der Feder (441) und des Druckes (p+) dicht schliesst. Weil die Dichtung (432) nicht mehr dichtet, tritt das Medium aus dem Zwischenraum (435) vorbei am Gewinde der Absperrschraube (435) in die Umwelt aus. Deshalb fällt der Druck in der Mess-Füllkammer (56) auf Null und so kann man die Absperrstutzen (561) ohne Schwierigkeiten ausschrauben. Nach dem Einbau des Mess-Entleerungshahnes schliesst man erneut die Absperrschraube bis zum Anschlag. Das Medium kann so in die Mess-Füllkammer (56) eintretten.
**Figur 22**
   Zeigt schematisch den Durchschnitt durch das axiale Regelventil an. Das Medium tritt in das Gehäuse (1) in Richtung (A) und tritt in Richtung (B) aus. Der Minusraum ist (29) und der Messansatz ist (59). Der ruhende Axialventilteller ist aus dem Konus (29), dem Dichteinsatz (27), dem Körper (251) und der Schraube (86). Das Medium tritt durch den Raum (272) zwischen dem Konus und dem Dichteinsatz bis zur Dichtlippe (271) auf dem Dichteinsatz und drückt sie dicht auf die Wand des Konus (29). Damit kommt das Medium überhaupt nicht zu der Fläche (253), wo die Schraube (86) auf den Körper drückt. Die Abdichtung ist mit einer Dichtlippe (271) ausgeführt.

## Patentansprüche

1. Axiales Regelventil **dadurch gekennzeichnet**, dass im Gehäuse (1) ein Dreiwegeventil (43) eingebaut ist, das dann, wenn sein Ventilteller (440) unter Druck der bis zum Ende eingedrehten Absperrschraube (431) geöffnet ist, das Medium mit dem Druck (p+) aus der Messdüse (29) durch die Bohrung (81) in den Minusraum (30) durchlässt, wo das Medium zusammen mit der Kraft der Hauptfeder (19) auf die selbstabdichtende Membrane (385) in Richtung Öffnen des beweglichen Ventiltellers (28) in Bezug auf den Ventilteller (251) wirkt, wenn aber die Absperrschraube (431) ausgeschraubt ist, dann ist der Ventilteller (440) unter Krafteinfluss der Feder (441) geschlossen, das Medium fliesst aus dem Minusraum (30) durch die Bohrung (81) und den Raum (435) und dann in die Umwelt, so dass deshalb das Medium mit dem Druck (dp+), das durch die Bohrung (63) in den Plusraum (37) auf die Membrane (385) wirkt, und den beweglichen Sitz (28) auf den Ventilteller (251) drückt und damit den Durchfluss schliesst.

2. Regelventil nach Anspruch 1, **dadurch gekennzeichnet**, dass das Dreiwegeventil (43) zusammengesetzt ist aus einem Sitz (437), der in das Gewinde (433) eingeschraubt ist und auf den Dichtrand (438) abgedichtet gegen das Gehäuse (1) ist, und einem Ventilteller (440), den die Feder (441) gegen den Dichtrand (438) drückt,und weiter einer Absperrschraube (431) die in das Gewinde (433) eingeschraubt ist und mit der Dichtung (432) abgedichtet ist, wobei auf der Absperrschraube eine Verlängerung, bzw. eine Patrone (434) angebracht ist, die durch die Bohrung (436) im Sitz (437) auf den Ventilteller (440) drückt und ihn in offener Position hält, wenn die Absperrschraube bis zum Ende eingeschraubt ist (433).

3. Regelventil nach Anspruch 1, **dadurch gekennzeichnet**, dass es als Durchflussregler funktioniert, wobei der Plusdruck (p+) aus der Messdüse (118) durch den Kanal (113) in den Plusraum (37) eintritt, wo es auf die selbstabdichtende Membrane (385) in Richtung Schliessung des beweglichen Ventiltellers (28) wirkt und der Minusdruck (p-) aus der Messdüse (118) durch den Kanal (114) und den geöffneten Ventilteller (440) des Dreiwegeventils (43) in den Minusraum (30) eintritt, wo es in Richtung Öffnen des beweglichn Ventilsitzes (28) wirkt.

4. Regelventil nach Anspruch 1, **dadurch gekennzeichnet**, dass der Druck (p-) in den minus Raum (994) durch eine externe Impulsleitung (998) geleitet wird wo ein Absperrventil (997) ist und sich der Minusraum durch das Auslassventil (993) entleert.

5. Regelventil nach Anspruch 1, **dadurch gekennzeichnet**, dass der Druck (p-) durch eine externe Impulsleitung (987) durch das Dreiwegeventil (987) und die äusserliche Impulsleitung (989) in die Minusraum (994) und sich in Auslassrichtung (988) des Dreiwegeventils (987) entleert.

6. Regelventil nach Anspruch 1, **dadurch gekennzeichnet**, dass auf der Minusseite (383) der selbstabdichtenden Membrane (385) ein Dichtring (387), der mit seiner Dichtfläche (386) und der Dichtlippe (388) unter Druck (p-) auf die Wande des radialen Nutes (399) im Membranteller (39) andrücken.

7. Regelventil nach Anspruch 1, **dadurch gekennzeichnet**, dass auf dem Membranteller (39) aus der Nut (399) radiale Kanäle (397) in den Kreischeibenkanal (396) führen, und durch Bohrungen (395) mit dem Minusraum (30) verbunden sind.

8. Regelventil nach Anspruch 1, **dadurch gekennzeichnet**, dass die Nut (399) ein wenig breiter als der Dichtring (387) ist so dass zwischen ihnen ein Spalt (398) entsteht und vor Einbau die Höhe des Dichtringes (387), das bedeutet der Scheitelpunkt der Dichtlippe (388) höher als die Tiefe der Nut (399) und sich nach dem Einbau unter Druckeinfluss (p+) und (p-) die Membrane (25) auf den Membranteller (39) und die Dichtlippe (388) einbiegt und auf den Grund des Nuts (399) eindrückt.

9. Regelventil nach Anspruch 1, **dadurch gekennzeichnet**, dass die Einstellung der Kraft der Hauptfeder (19) ausgeführt mit Einstellplättchen (222) ist, die über eine Bewegliche Konsole (21) auf die Hauptfeder (19) drücken und die in das Gewinde (225) in Ansätzen (221) im Gehäuse (1) eingeschraubt sind und mit einer Dichtung (226) abgedichtet sind.

10. Regelventil nach Anspruch 1, **dadurch gekennzeichnet**, dass das Einstellelement aus einer Andrückschraube (227) und einer Stirnschraube (223) die in ein Gewinde (228) in der Eindrückschraube (227) eingeschraubt ist, wobei zwischen beiden Schrauben Distanzplättchen (224) zusammengedrückt sind und mit der variirung von deren Anzahl sich die Kompresion der Federn ändert.

11. Regelventil nach Anspruch 1, **dadurch gekennzeichnet**, dass die Gleitfläche (281) und der Ventilteller (251) in das Gehäuse (1) von aussen in die Öffnung (240) eingesetzt ist und die Gleitfläche auf den Ring (242) angelehnt ist und der Ventilteller (251) in das Gewinde (241) und die Gleitfläche (281) auf den Ring (242) drückt und ihn damit fixiert, wobei die Gleitfläche mit einer Dichtung (256) abgedichtet wird.

12. Regelventil nach Anspruch 1, **dadurch gekennzeichnet**, dass in der Nut (230), der zugleich Abschluss des Gewindes (241) ist, neben der Dichtung (256) noch eine weitere Dichtung (255) eingebaut hat, die die Abgleitung der Dichtung (256) im Gewinde verhindert und zugleich den Ventilteller (251) vor Lösung der Schraubverbindung (241) schützt.

13. Regelventil nach Anspruch 1, **dadurch gekennzeichnet**, dass die Nut (230) eine solche länge hat, das der Gewindeanfang auf dem Ring (254) wenigstens teilweise in die Dichtung (255) ist und damit gegen die Lösung der Gwindeverbindung ist und wobei die Dichtung (256) nie das Gewinde (241) erreicht sondern sich an die Dichtung (255) anlehnt.

14. Regelventil nach Anspruch 1, **dadurch gekennzeichnet**, dass in die Bohrung (113) eine Absperrschraube (575) eingeschraubt in das Gewinde (578) ist und für das vollständig dichte Schliessen in das gleiche Gewinde noch ein Stutzen (561) mit der Dichtung angebracht ist.

15. Regelventil nach Anspruch 1, **dadurch gekennzeichnet**, dass es in der Nut (577) eine weiche Dichtung (576) besitzt.

16. Regelventil nach Anspruch 1, **dadurch gekennzeichnet**, dass im Durchflussregler die Absperrschraube (575) ist, in die ein Kanal (114) eingebaut hat.

17. Regelventil nach Anspruch 1, **dadurch gekennzeichnet**, dass die Einstellelemente (222) auf kleinerem Durchmesser als der äussere Durchmesser des Gegenflansches (911) angebracht ist und in dem Gegenflansch Bohrungen (912) sind durch welche sich die Einstellelemente in das Gehäuse (1) einfügen.

18. Multifunktionales axiales Regelventil, **dadurch gekennzeichnet**, dass in einem einzigen axialen Regelventil Elemente eingebaut sind, die eine Messung des Durchflusses, die Absperrung, Begrenzung der Öffnung, den Auslass und die Regulierung des Differenzdruckes oder Durchflusses, bzw. eine gleichzeitige Regulierung des Differenzdruckes und Durchflusses und wo in der Eintrittskammer (1) eine Messdüse (118) eingebaut ist, wobei der Plusdruck (+) und Minusdruck (-), die in der Messdüse entstehen, gleichzeitig für die Durchflussmessung als auch der Impuls für die Regulierung des Differenzdruckes oder Durchflusses und wo in der Eintrittskammer (1) eine Absperrmutter (108) angeschraubt ist, die über Absperrachsen (7) auf den Teller (39) drückt und mit einem beweglichen rohrförmigen Ventilsitz (28) verbunden ist und damit das Öffnen und Schliessen des Ventils (25) ermöglicht und auf gleichem Niveau (48) wie die die Absperrmutter (108) auch die Begrenzungsmutter (3) angeschraubt ist.

19. Multifunktionales axiales Regelventil, nach Anspruch 18, **dadurch gekennzeichnet**, dass als Messdüse (118) die schon im Axialventil vorhandene Verengung des Durchmessers vom Nenndurchmesser (D1) auf den Durchmesser des beweglichen rohrförmigen Ventiltellers (28) benützt wird und der Winkel (K2) in er Düse gleich oder kleiner als 45° und die Halbmesser (R1) und (R2) auf dem mittlerem Ring (44) so gross wie nur möglich ist.

20. Multifunktionales axiales Regelventil, nach Anspruch 18, **dadurch gekennzeichnet**, dass die Messdüse (118) aus einem Eintrittsring (46), der in die Eintrittskammer (1) eingeschraubt ist und eine scharfe Kante besitzt, aus einem mittlerem Ring (44) der ebenfals eine scharfe Kante aufweisst und einem Austrittsring (41) besteht und zwischen dem Eintrittsring (46) und mittlerem Ring (44) auf dem ganzen Umfang der Plusspalt (45) ist, der sehr schmall ist und unter dem Winkel (K1) gegen die Mittelachse (26) geneigt ist, wobei der gesammte Spalt des Plusspaltes (45) so gross ist, dass für die Entleerung und zwischen dem mittlerem Ring (44) und dem Austrittsring (41) auf dem gesammten Umfang ein sehr schmaler Minusspalt (81) der nur so breit ist, dass er für die Messung und den übergang des Regukationsimpulses genügt.

21. Multifunktionales axiales Regelventil, nach Anspruch 18, **dadurch gekennzeichnet**, dass der Plusdruck (+) und Minusdruck (-) aus der Messdüse (118) in eine gemeinsame Messkammer (56) im Messansatz (59) münden und dass beide Drücke eine Dichtung voneinader trennt, die ein sternförmiger Ring (57) fixiert und zentriert, wobei der sternförmige Ring mit einem Kugelhahn (55) befestigt sein kann oder auf dem Ring ein Gewinde hat und in das gleiche Gewinde wie der Kugelhahn eingeschraubt ist und wobei der Plusdruck (+) zwischen den Rippen (73) aus der Bohrung (113) in die Messkammer (56) und aus ihr als Regelimpuls in die Bohrung (54) und die inneren Flanken (75) so geformt sind, dass beim einfügen leiten dabei progresiv die Spitze des Messröhrchens (85).

22. Multifunktionales axiales Regelventil, nach Anspruch 18, **dadurch gekennzeichnet**, dass das Plusmessröhrchen (82) und Minusmessröhrchen (85) in eine Einheit zusammengesetzt sind, wobei das Minusmessröhrchen (85) konzentrisch in die Mitte des Plusmessröhrchens (82) angeordnet ist und in das Minusmessröhrchen (85) so weit vom Plusmessröhrchen (82) reicht, dass die Öffnung (84) in die Bohrung (114) reicht wenn die Öffnung (83) auf dem Plusmessröhrchen (82) in die Messkammer (56) reicht und das Plusmessröhrchen (56) zwischen der Messung auf dem äusseren Rand mit einer Dichtung (77) abgedichtet ist, die eingebaut in den Dichtensatz (78), der entgegen dem Kugelhahn (55) mit einer Dichtung (79) abgedichtet ist, wobei der Dichteinsatz so lang ist, dass bei geschlossenem Kugelhahn (55) und in das Plusmessröhrchen (82) abgedichtt sind.

23. Multifunktionales axiales Regelventil, nach Anspruch 18, **dadurch gekennzeichnet**, dass in die Messdüse (118) zentrisch und parallel mit der Achse (26) ein Einsatz (29) eingebaut ist der auf die Feder (88) eingeschraubt ist wobei die Stirn des Einsatzes so weit in das Innere der Messdüse (108) einreicht, dass bei allen Durchflüssen die gleiche Geometrie des Strahls auf dem Rand (42) des mittleren Ringes (44) und der Durchmesser (D3) in einem solchen Verhältniss entgegen der erforderten Präzision der Messung ein ausreichender Unterschied zwischen dem plus (+) und Minusdruck (-) auch bei relativ kleinen Durchflüssen erreicht werden kann.

24. Multifunktionales axiales Regelventil, nach Anspruch 18, **dadurch gekennzeichnet**, dass der Eintrittsring (46) und mittlere Ring (44) vereint und aus einem Stück hergestellt sind und die Abnahme des Plusdruckes (+) durch die Öffnungen ausgeführt ist, die entsprechend dem Kanal (66) positioniert sind.

25. Multifunktionales axiales Regelventil, nach Anspruch 18, **dadurch gekennzeichnet**, dass in dem Spalt (45) auf der Stirn des Mittleren Ringes Zähne (451) sind und in dem Spalt (81) auf dem Austrittsring (41) oder dem Mittelring (44) Zähne (811) angebracht sind die eine gleichbleibende Breite des Spaltes sichern und wobei die Zähne wenigstens drei sindund verlauffen paralel mit der Achse (26).

26. Multifunktionales axiales Regelventil, nach Anspruch 18, **dadurch gekennzeichnet**, dass die Absperrmutter (108) aus dem inneren Ring (53), der auf inneren Seite ein Gewinde hat (481) das in das Gewinde (48) auf dem Eintrittsgehäuse (1) eingreift und aus dem äusseren Ring (50) auf welchem eine Skala (51) ist und dass beide Ringe mit einer trennbaren Kupplung (52) verbunden sind, wobei es zwischen der Montage des Ventils nach einer genauen Einstellung der Nullstellung (51) entgegen der Skala (9), die auf der Eintrittskammer (1) beide Ringe mit einem entsprechendem Mittel in eine unzertrennbare Einheit verbinden und damit die Lage Null für jedes einzige Ventil dauerhaft genau bestimmt ist.

27. Multifunktionales axiales Regelventil, nach Anspruch 18, **dadurch gekennzeichnet**, dass die Begrenzungsmutter (3) mit einer Sicherungsschraube (5) die eine Bohrung (4) zur plombierung gegen eine Lösung der Schraubverbindung gesichert ist und sich unter der Mutter (3) auf dem Eintrittsgehäuse (1) Längsnute befinden, die parallel mit der Achse (26) verlaufen und tiefer als das Untere Mass vom Gewinde (48) sind so dass die Spitze (90) der Schraube nicht entlang des Gewindes (48) abgleiten kann und auf der Begrenzungsmutter (3) knapp neben der Sicherungsschraube (5) eine Bohrung (2) angebracht ist, die zu der Versiegelung der Sicherungsschraube (5) dient.

28. Multifunktionales axiales Regelventil, nach Anspruch 18, **dadurch gekennzeichnet**, dass auf der Flanke des inneren Ringes (53) der Absperrmutter (108) ein Begrenzungszahn (68) ausgeführt mit der Höhe (H) ist, die etwas kleiner als der Schritt des Gewindes (48) ist und auf der Begrenzungsmutter (3) ein Zahn (681) ist auf welchen der Zahn (68) eintrifft wenn sich der innere Ring (53) in Richtung Öffnen (O) bewegt, wobei der Anfang des Gewindes auf dem Begrenzungsring (3) so entgegen dem Gewinde (481) des inneren Ringes (53) angebracht ist, dass sich beide Zähne (68 und 681) schneller treffen als die Flanken des inneren Ringes (53) und der Begrenzungsmutter (3).

29. Multifunktionales axiales Regelventil, nach Anspruch 18, **dadurch gekennzeichnet**, dass die Absperrachsen (7) wenigstens drei sind und immer unter dem Rand (6) der Eintrittskammer (1) untergebracht sind und so gegen Beschädigung gesichert sind.

30. Multifunktionales axiales Regelventil, nach Anspruch 18, **dadurch gekennzeichnet**, dass die Wand des Tellers (39) und die seitliche Flanke (40) der Pluskammer (37) rechtwinklig auf die Achse (26) istoder die Setliche Wand (40) mit dem äusseren Rand ein wenig in Richtung der Eintrittsrichtung (A) geneigt ist, was eine Entlüftung der Pluskammer (37) durch die Bohrung (10) mit einer Entlüftungsschraube (11) bei horizontalem oder vertikalem Einbau ermöglicht.

31. Multifunktionales axiales Regelventil, nach Anspruch 18, **dadurch gekennzeichnet**, dass die Ansätze (59) und (62), die der Durchflussmessung dienen und der Zeiger (9) auf der unteren Seite des Ventils also auf der gegenseitigen Richtung als die beiden Entlüftungsschrauben (11), (12) ist was einen einfacheren Zutritt zu den Ansätzen und eine bessere Sichtbarkeit des Zeigers ermöglicht.

32. Multifunktionales axiales Regelventil, nach Anspruch 18, **dadurch gekennzeichnet**, dass die Mündung (67) der Bohrung (54) durch welche der Plusdruck (+) in die Minuskammer (30) eintritt so weit entfernt von der Mündung (69) der Auslassbohrung (361) wie nur möglich ist, was ein gute Spüllung der Unreinheiten aus der Minuskammer (30) ermöglicht und das gleiche gilt auch für die Pluskammer (37) und Auslassbohrung (351).

33. Multifunktionales axiales Regelventil, nach Anspruch 18, **dadurch gekennzeichnet**, dass es als Differenzdruckregler funktioniert, wobei der Plusdruck (+) aus der Messdüse (118) durch den Ansatz (59) und die Bohrung (54) in die Minuskammer (30) eintritt und zusammen mit der Kraft der Federn (19), die im Ring angeordnet auf dem Umfang der Minuskammer (30) in Öffnungsrichtung des Ventils auf die Membrane (38) wirkt und durch den Ansatz (62) in die Bohrung (63) von aussen in die Pluskammer (37) der Druck (dp+) eintritt, die auf die Membrane (38) in Richtung Ventilschliessung wirkt und der Differenzdruck mit Hilfe einer Einstellmutter (23) eingestellt wird, die über Einstellachsen (22) und einer Konsole (20) auf die Federn (19) drückt.

34. Multifunktionales axiales Regelventil, nach Anspruch 18, **dadurch gekennzeichnet**, dass es als Durchflussregler funktioniert, wobei der Plusdruck (+) durch die Messdüse (118) durch die Bohrung (109) in die Pluskammer (37) eintritt und auf die Membrane (38) in Richtung Ventilschliessung einwirkt, wobei die Bohrung (109) über die Bohrung (110) mit dem Ansatz (62) verbunden ist und damit eine Druckmessung oder Schliessung ermöglicht und wo der Minusdruck (-) aus der Messdüse (118) durch die Bohrungen (111) und (112) im Ansatz (59) in die Minuskammer (30) eintritt und zusammen mit dem Federring (19) auf die Membrane (38) in Richtung Ventilschliessung wirkt und sich so der Durchfluss mit Hilfe der Einsteilmutter (23) einstellt die uber Einstelachsen und eine Konsole (20) auf die Federn (19) drückt.

35. Multifunktionales axiales Regelventil, nach Anspruch 18, **dadurch gekennzeichnet**, dass er als Durchflussregler funktioniert wobei der plus (+) und (-) Druck beide in den Ansatz (59) eingeführt sind und der Ansatz (62) für den Auslass über die Bohrung (125) dient, wobei der Plusdruck (+) über die Kanäle (120) und (121) in die Pluskammer (37) und über die Bohrung (122) bis zur Gummimanschette (58) reicht und der Minusdruck (-) durch die Bohrung (123) in die Messkammer (56) eintritt und weiter durch die Bohrung (124) in die Minuskammer (30).

36. Multifunktionales axiales Regelventil, nach Anspruch 18, **dadurch gekennzeichnet**, dass die Eintrittskammer (1) und Austrittskammer (24) in Flanschausführung wobei in beiden Gehäusehälften blinde Gewindebohrungen (92) für die Befestigungsschrauben und die Absperrachsen (7) und Einstellachsen (22) äusser dem äusseren Membrandurchmesser (38) sind.

37. Multifunktionales axiales Regelventil, nach Anspruch 36, **dadurch gekennzeichnet**, dass die Absperrachsen (7) und Einstellachsen (22) äusser dem äusseren Durchmesser des Gegenflansches (91) angeordnet sind.

38. Multifunktionales axiales Regelventil, nach Anspruch 36, **dadurch gekennzeichnet**, dass sich die Absperrachse (7) mit Hilfe einer Absperrmutter (94) bewegt die mit einem rechten Gewinde (95) in die Differentialmutter (97) eingreift, die mit einem linken Gewinde (96) in das Eintrittsgehäuse (1) eingreift wobei die Absperrmutter (94) blinde Bohrungen (93) besitzt in welche die Absperrachsen (7) reichen wobei die Absperrmutter (94) gegen Verdrehung und die Differentialmutter (97) gesichert mit einer Schraube (99) ist und auf die Einstellachse (22) eine Einsteilmutter (23), die mit dem rechten Gewinde (106) in einen Differentialmutter (104) eingreift welches mit einem linken Gewinde (105) in die Austrittskammer (24) eingreift.

39. Multifunktionales axiales Regelventil, nach Anspruch 36, **dadurch gekennzeichnet**, dass die die Gewinderichtung (95), (96), (106) und (105) beliebig ist, wobei es dringend ist, dass das Gewinde zwischen der Absperrmutter (94) und der Differentialmutter (97) eine gegenseitige Drehrichtung des Gewindes hat als das Gewinde zwischen der Differentialmutter (97) und der Eintrittskammer (1) und das das gleiche auch für die Einsteilmutter (23) und Differentialmutter (104) auf der Austrittskammer (24).

40. Multifunktionales axiales Regelventil, nach Anspruch 18, **dadurch gekennzeichnet**, dass die Membrane (38) auf dem äusseren Rand in die Eintrittskammer (1) mit dem Befestigungsring angebracht ist, dass die Schrauben (100) auf die Eintrittskammer (1) angeschraubt sind und die Anlehnung (107) auf dem Austrittsring (41) angebracht hat (116) wobei die Flanke der Membrane (382) oder (381) von seiner Anlehnung (107) oder (116) wenn das Ventil vollständig geöffnet entfernd wenigstens für die Hälfte des Ventilhubes und dazu noch die Ausdehnung der Membrane bei grösstem zugelassenem Druck wobei einer Zerreissung der Membrane bei überlastung wirkungsvoll entgegengewirkt wird.

41. Multifunktionales axiales Regelventil, nach Anspruch 36, **dadurch gekennzeichnet**, dass der Ansatz (116) mit dem Gewinde (117) auf den Austrittsring (41) angebracht ist und der Tellerhub (39) mit dem Ansatz (102) begrenzt ist.

42. Multifunktionales axiales Regelventil, nach Anspruch 36, **dadurch gekennzeichnet**, dass der Differenzdruckregler zwischen der Eintrittskammer (1) und Austrittskammer (24) ein mittleres Gehäuse (110) angebracht ist und in die Austrittskammer (24) zusätzliche Elemente für noch einen Regler des Differenzdruckes, der mit der Abnahme des Plusimpulses durch die Bohrung (115) und der Abnahme des Minusimpulses durch die Bohrung (112) grundsätzlich als Durchflussregler, den der Druckabfall im Differnzdruckregler regelt und der in der Eintrittskammer angebracht ist.

43. Multifunktionales axiales Regelventil, nach Anspruch 18, **dadurch gekennzeichnet**, dass nur Elemente eingebaut sind die für die Messung des Durchflusses, die Absperrung, Begrenzung der Öffnung und den Auslass und wo das Eintrittsgehäuse (1) auf der unteren Seite nur einen Ansatz (59) hat und das Eintrittsgehäuse (1) und Austrittsgehäuse (24) direkt mit einem Gewinde (181) verbunden sind.

44. Multifunktionales axiales Regelventil, nach Anspruch 18, **dadurch gekennzeichnet**, dass es auf der unteren Seite eine Auslassschraube (35) und auf der oberen Seite eine Entlüftungsschraube (12) und für die Öffnung des Ventils eine einzige Schraubenfeder (191) dient.

45. Multifunktionales axiales Regelventil, nach Anspruch 18, **dadurch gekennzeichnet**, dass der Teller (391) auf dem Umfang Nute (392) hat in welche Absperrachsen (701) eingreifen auf welchen wider ein Nut (703) ist und wo auf der von aussen erreichbaren Seite der Absperrachse (701) eine Bohrung mit dem Gewinde (702) ausgeführt ist, die eine Öffnung des Ventils von Aussen ermöglicht wenn die Kraft der Feder (191) dazu nicht genügt und wo der Spalt zwischen der Absperrachse (701) und dem unteren Punkt der Nut (392) grösser als die grösste mögliche termische Ausdehnung des Tellers ist.

46. Multifunktionales axiales Regelventil, nach Anspruch 18, **dadurch gekennzeichnet**, dass die Eintrittskammer und Austrittskammer (24) mit einer Ringmutter (16) verbunden sind von welcher die äussere Fläche (15) so glatt ist, dass sie als Typenschild dienen kann.

47. Multifunktionales axiales Regelventil, nach Anspruch 18, **dadurch gekennzeichnet**, dass die Stirnfläche (17) des Eintrittsgehäuses (1) und Austrittsgehäuses (24) rauh oder verrippt hergestellt ist.

48. Axiales Regelventil, **dadurch gekennzeichnet**, dass im Gehäuse (1) ein Dreiwegeventil (43) eingebaut ist, dass wenn sein Ventilteller (440) mit der Öffnungsnadel (434) angehoben ist und geöffnet, dass Medium durchlässt mit dem Druck (p+) aus dem Raum (661) durch den Kanal (113) und (115) die Mess/Entleerungskammer (56) wobei die Öffnungsnadel dabei genügend dicht in das Gehäuse (1) eingedreht ist und mit der Dichtung (432) abgedichtet ist und sich dabei die Absperrschraube (435) genügend geöffnet die Öffnungsnadel (434) vom Ventilteller (440) wegrückt, die die Feder (441) auf den Sitz (438) in dem Einsatz (437) drückt und damit dicht den Übergang des Mediums aus dem Kanal (113) in die Messkammer (56).

49. Axiales Regelventil, **dadurch gekennzeichnet**, dass auf dem Dichteinsatz (27) eine Dichtlippe (271), die unter dem Druck (p+) auf die Wand des Konus (29) angedrückt ist und damit und den Übergang des Mediums zwischen dem Konus (29) und dem Dichteinsatz (27) abdichtet.
